# EUROPEAN PATENT SPECIFICATION

(11) **EP 3 730 559 B1**
(45) Date of publication and mention of the grant of the patent: **02.11.2022**
(21) Application number: 17935417.0
(22) Date of filing: 20.12.2017
(51) Int. Cl.: C09D 11/101, C09D 11/322, C09D 11/40, C09D 11/38, C09D 11/36, B41M 5/00

(54) **ACTIVE RAY-CURABLE INKJET INK SET AND INKJET RECORDING METHOD**
AKTIVSTRAHLUNGSHÄRTBARER TINTENSTRAHLTINTENSATZ UND TINTENSTRAHLAUFZEICHNUNGSVERFAHREN
JEU D'ENCRES JET D'ENCRE DURCISSABLES PAR RAYONNEMENT ACTIF ET PROCÉDÉ D'IMPRESSION JET D'ENCRE

(43) Date of publication of application: 28.10.2020
(73) Proprietor: KONICA MINOLTA, INC., Tokyo 100-7015 (JP)
(72) Inventor: YAMAGUCHI, Go, Tokyo 100-7015 (JP); IKEDA, Masashi, Tokyo 100-7015 (JP)
(74) Representative: Hoffmann Eitle
(86) International application number: PCT/JP2017/045700
(87) International publication number: WO 2019/123564

(56) References cited:
- EP-A1- 1 892 105
- EP-A1- 3 130 646
- WO-A1-2016/098678
- JP-A- 2003 251 935
- JP-A- 2009 263 599
- US-A1- 2006 189 712
- US-A1- 2011 234 680

## Description

### Technical Field

The present invention relates to an active ray curable inkjet ink set and an inkjet recording method using the same. In particular, the present invention relates to an active ray curable inkjet ink set containing a white ink and a colored ink enabling to obtain an inkjet image having excellent abrasion resistance and adhesion of a formed image, and an inkjet recording method using the same.

### Background

Inkjet printing techniques have been used in various fields of printing since images may be formed easily at low costs. In the inkjet image recording method, a suitable combination of inks is selected from a yellow ink, a magenta ink, a cyan ink and a black ink according to the color to be formed, and a full color image may be obtained by overprinting the selected inks.

Currently, when using inkjet ink to record an image on a transparent film or vapor-deposited paper, which is widely used as a soft packaging material in the packaging material field, since the recording medium does not have an ink absorbing layer, there is a problem that the image quality is lowered due to liquid deviation or color bleeding at the time of ink landing.

An active ray curable inkjet ink is used as one of the measures against the above problems. In this method, after ink droplets are landed on a recording medium, an active ray, for example, an ultraviolet ray is irradiated and cured to form an image. The active ray curable inkjet image forming method has been attracting attention in recent years because an image having high abrasion resistance and adhesion may be formed even on a recording medium having no ink absorbing property.

On the other hand, when an image is recorded on a non-absorptive recording medium such as a transparent film or vapor-deposited paper using an active ray curable inkjet ink as described above, generally, a method has been adopted in which a formed color image (colored image) is overcoated or undercoated with a white image using a white ink to enhance the visibility of the color image. In such a method, titanium oxide having high shielding power is widely used as a white pigment for a white ink.

When forming a white ink image on a colored ink image with an active ray curable inkjet ink set composed of a white ink and a colored ink as described above, in the case of using titanium oxide as a white pigment of the white ink after forming a colored ink image and curing the formed white ink layer by irradiating active ray, an active ray, for example, ultraviolet light, reaches the inside of the layer sufficiently due to scattering of titanium oxide particles in the layer. As a result, the curing of the ink film is sufficient, but when the amount of irradiated light becomes excessive, the number of the polymerization start points of the photopolymerizable compound increases and the polymerization reaction proceeds rapidly in a dispersed state, so that a brittle film composed of a cured product of low molecular weight is formed.

On the other hand, in the case of forming a color image by a colored ink after forming an image by a white ink, the color material (e.g., pigment particles) composing the color image located above absorbs ultraviolet rays at the time of irradiation of the active ray, so that the amount of the active ray reaching the white ink layer is reduced, and unless the irradiation light amount is increased, the curing of the white ink layer does not proceed. That is, in the configuration in which the white ink layer is disposed on the surface layer side and the configuration in which the color image is disposed on the white ink layer, it is difficult to simultaneously satisfy the coating film physical properties of both of them.

To cope with the above-mentioned various problems, for example, Patent Document 1 discloses a recording method using a white ink and a colored ink, in which a weak UV-LED beam is irradiated each time each when an ink liquid is ejected onto a recording medium to perform semi-curing pinning, and then last main curing is performed with mercury lamps, thereby suppressing the generation of bleeding and repelling in cured layers and improving ink adhesiveness. However, in the above method, although the adhesiveness is improved, the film strength (abrasion resistance) in each ink as described above, the adhesiveness between the formed image and the recording medium, or the adhesiveness between the formed image layers are not sufficient.

On the other hand, in the image forming method using these active ray curable inkjet ink sets, when a high-speed recording system such as a single-pass recording system using a line recording head or a high-speed serial system with a small number of passes is employed, it is not possible to suppress coalescence between adjacent dots, thereby resulting in a problem of poor image quality. In the case of recording a color image, there is a problem that color mixing occurs between colors and image quality is deteriorated.

To cope with the above problems, it has been investigated to add a gelling agent as a method for enhancing pinning of an inkjet ink used in an inkjet recording system. That is, it has been investigated to suppress the coalescence of dots by discharging ink droplets in a liquid state at a high temperature, landing on a recording medium, and cooling the ink droplets to cause them to gel at the same time. Since the active ray curable inkjet ink containing the gelling agent has a characteristic of instantaneous phase transition by being cooled, it is possible to prevent deterioration in image quality due to liquid deviation or color mixing. As a result, it becomes unnecessary to perform pinning as described in Patent Document 1, and it has an advantage of being able to form an image by irradiating all the ink images with the active ray after printing all the ink images at once.

As such a method, for example, Patent Document 2 discloses a curable phase change ink in which a gelling agent, a white pigment, and a photocurable monomer are irradiated. However, as a result of detailed investigation by the present inventor, it has been found that the white ink containing the gelling agent disclosed in Patent Document 2 tends to generate cracks from the gelling agent as a starting point and has a low abrasion resistance.

Further, it has been found that when the image formation is performed using the white ink and the colored ink, the film strength is lowered due to the curability caused by the stacking of the white ink image and the colored ink image as described above, and the gelling agent is present in the interface region between the white ink image and the colored ink image, so that peeling is likely to occur between the ink layers or at the interface between the ink layer and the recording medium. That is, in the active ray curable inkjet ink set containing the gelling agent, it is difficult to achieve both the film strength and the adhesiveness, and urgent measures are desired.

### Prior art Documents

### Patent Documents

Patent Document 1: JP-A2011-218794
Patent Document 2: JP-A2009-041015

### Summary of the Invention

### Problems to be solved by the Invention

The present invention has been made in view of the above-mentioned problems and situation. An object of the present invention is to provide an active ray curable inkjet ink set comprising a white ink and a colored ink enabling to obtain an inkjet image excellent in abrasion resistance and adhesion of a formed image, and an inkjet recording method using the same.

### Means to solve the Problems

As a result of intensive investigation in view of the above-mentioned problems, the present inventor has found that an active ray curable inkjet ink set comprising a white ink and a colored ink containing at least a photopolymerizable compound and a photopolymerization initiator, wherein the white ink further contains titanium oxide, the colored ink further contains a color material, a value of a mass ratio of a content of the photopolymerization initiator in the white ink to a content of the photopolymerization initiator in the colored ink, namely in (white ink/colored ink), is controlled to a specific range, and a content of the photopolymerization initiator of the white ink is within a specific range with respect to the total mass of the ink. Thereby it is possible to realize an active ray curable inkjet ink set comprising a white ink and a colored ink, wherein an inkjet image having excellent abrasion resistance and adhesion can be obtained.

That is, the above-mentioned problem according to the present invention is solved by the following means as described in the claims.

### Effects of the Invention

According to the present invention, it is possible to provide an active ray curable inkjet ink set composed of a white ink and a colored ink, and an inkjet recording method using the same, in which an inkjet image excellent in abrasion resistance and adhesion of a formed image is obtained.

The expression mechanism or action mechanism of the effect of the present invention is not clarified, but is inferred as follows.

As described above, when forming an image using the active ray curable white ink and colored ink, particularly when titanium oxide is applied as a white pigment as the white ink, in the case of the configuration in which the white ink layer is disposed on the surface side (the active ray irradiation surface side), the active ray to the white ink layer reaches the inside of the white ink layer due to the high light scattering property of titanium oxide, so that the amount of the active ray becomes excessive, and as a result, the reaction start point of the photopolymerizable compound and the photopolymerization initiator increases, and as a result, the number of reactions of the polymerizable compound increases, but the polymerization per the polymer compound decreases relatively, resulting in an ink film of low molecular weight, and abrasion resistance and bending resistance decrease. In order to prevent this, if the irradiation amount of the active ray is reduced, the degree of curing of the color image by the colored ink located below becomes insufficient.

In addition, in the case of the configuration in which the colored ink layer is disposed on the front surface side, that is, on the active ray irradiation surface side, the amount of light reaching the white ink layer located below is lowered.

In view of the above problems, the present invention solved the above problems by setting the content ratio of the photopolymerization initiator between the white ink and the colored ink to a specific condition that is not conventionally available and controlling the content of the photopolymerization initiator in the white ink to a specific range in order to realize the photocuring of the white ink and the colored ink with the most favorable balance of the photopolymerization reaction.

### Brief Description of the Drawings

FIG. 1A is a schematic side view illustrating an example of an inkjet recording apparatus employing pinning applicable to the inkjet recording method of the present invention (Embodiment 1).
FIG. 1B is a schematic top view illustrating an example of an inkjet recording apparatus employing pinning applicable to the inkjet recording method of the present invention (Embodiment 1).
FIG. 2A is a schematic side view illustrating an example of an inkjet recording apparatus using an ink containing a gelling agent applicable to the inkjet recording method of the present invention (Embodiment 2).
FIG. 2B is a schematic top view illustrating an example of an inkjet recording apparatus using an ink containing a gelling agent applicable to the inkjet recording method of the present invention (Embodiment 2).
FIG. 3A is a schematic side view illustrating another example of an inkjet recording apparatus using an ink containing a gelling agent applicable to the inkjet recording method of the present invention (Embodiment 3).
FIG. 3B is a schematic top view illustrating another example of an inkjet recording apparatus using an ink containing a gelling agent applicable to the inkjet recording method of the present invention (Embodiment 3).
FIG. 4A is a schematic cross-sectional view illustrating an example of a configuration of a stacked inkjet image formed by the Embodiment 1.
FIG. 4B is a schematic cross-sectional view illustrating an example of a configuration of a stacked inkjet image formed by the Embodiment 2.
FIG. 4C is a schematic cross-sectional view illustrating an example of a configuration of a stacked inkjet image formed by the Embodiment 3.

### Embodiments to carry out the Invention

The active ray curable inkjet ink set of the present invention comprises a white ink and a colored ink each containing at least a photopolymerizable compound and a photopolymerization initiator, wherein the white ink further contains titanium oxide and a gelling agent, the colored ink further contains a color material, a value of a mass ratio of a content of the photopolymerization initiator in the white ink to a content of the photopolymerization initiator in the colored ink, namely in (white ink/colored ink), is in the range of 0.10 to 0.90, and a content of the photopolymerization initiator in the white ink is in the range of 0.3 to 2.7 mass% with respect to the total mass of the ink. This feature is a technical feature common to the present invention according to each of the following embodiments.

As an embodiment of the present invention, the white ink contains a gelling agent from the viewpoint that the effect of the present invention may be further exhibited, since the ink is gelled by crystallization of the gelling agent when the ink lands on the recording medium and is cooled, the pinning property of the ink becomes high, and it is possible to prevent deterioration of the image quality due to liquid deviation or color mixture of the formed image.

Further, it is preferable that the content of the gelling agent of the white ink is in the range of 0.3 to 2.5 mass% with respect to the total mass of the ink, in that a high-quality image is obtained and an image excellent in adhesion is obtained.

Titanium oxide applied to the white ink has a higher surface hydrophilicity than other pigments, and therefore has a weak interaction with a hydrophobic gelling agent, so that the gelling agent is in an environment in which the gelling agent tends to precipitate on the surface in the formed white ink layer. In the present invention, by setting the content of the gelling agent to 2.5 mass% or less, it is possible to prevent the occurrence of peeling due to a decrease in adhesion between the white ink layer and the colored ink layer or between the white ink layer and the recording medium when the abrasion resistance evaluation or the adhesion evaluation is performed. Further, by setting the content of the gelling agent to 0.3% by mass or more, it is possible to improve the adhesiveness, prevent the mixture of the ink droplets and prevent the occurrence of color bleeding, and obtain a sharp image. It is important to set the amount of the gelling agent specified above.

In the present invention, there is no particular limitation on the gelling agent, but in particular, it is preferable to apply a compound having a structure represented by Formula (G1) or (G2) from the viewpoint that the above effect of the present invention may be further exhibited.

The inkjet recording method of the present invention is characterized in that an active ray curable inkjet ink set composed of the white ink and the colored ink of the present invention is used, having the steps of: printing an image with the white ink and the colored ink on a recording medium; and then irradiating the white ink and the colored ink with the active ray to cure and thereby performing image recording.

Further, in the case of an image to be observed from the side of the image layer forming surface by printing the white ink on a recording medium, followed by printing the colored ink, and then irradiating the active ray at a time, it is preferable that a value of a mass ratio of a content of the photopolymerization initiator in (white ink/colored ink) be in the range of 0.30 to 0.70 in order to achieve the object effect of the present invention.

Further, in the case of an image to be observed from the side opposite to the image layer forming surface by printing the colored ink on a recording medium, followed by printing the white ink, and then irradiating the active ray at a time, it is preferable that a value of a mass ratio of the content of the photopolymerization initiator in (white ink/colored ink) be in the range of 0.20 to 0.60 in order to achieve the object effect of the present invention.

Hereinafter, the present invention, its constituent elements, and configurations and embodiments for carrying out the present invention will be described. In the present application, "to" is used in the meaning that numerical values described before and after are included as a lower limit value and an upper limit value.

### «Active ray curable inkjet ink set»

The active ray curable inkjet ink set (hereinafter, it may be called simply "an ink set") of the present invention is composed of a white ink and a colored ink each containing at least a photopolymerizable compound and a photopolymerization initiator.

Examples of the colored ink constituting the ink set of the present invention include a blue ink, a green ink, and a red ink, in addition to a yellow ink, a magenta ink, and a cyan ink.

The details of the components of the ink according to the present invention will be described.

### [Photopolymerizable compounds]

The ink constituting the ink set of the present invention contains a photopolymerizable compound. The photopolymerizable compound according to the present invention has a function of polymerizing by active ray and curing the ink.

The photopolymerizable compound may be any of a monomer, a polymerizable oligomer, a prepolymer or a mixture thereof. In the ink according to the present invention, only one type of photopolymerizable compound may be contained, or two or more types may be contained.

The active rays mentioned here are, for example, energy rays such as electron beams, ultraviolet rays, α-rays, γ-rays, and X rays, and preferably ultraviolet rays and electron beams. The photopolymerizable compound is a radical polymerizable compound or a cationic polymerizable compound, and is preferably a radical polymerizable compound.

The content of the photopolymerizable compound is, for example, preferably in the range of 1 to 97 mass% with respect to the total mass of the ink according to the present invention from the viewpoint of film properties such as curability and flexibility. More preferably, it is in the range of 30 to 95 mass%.

### (Radically polymerizable compound)

As a radically polymerizable compound applicable to the present invention, an unsaturated carboxylic acid ester is preferable, and (meth)acrylate is more preferable.

In the present invention, the term "(meth)acrylate" means acrylate or methacrylate, the term "(meth)acryloyl group" means acryloyl group or methacryloyl group, and the term "(meth)acryl" is acryl or methacryl.

Examples of the (meth)acrylate compound include monofunctional monomers such as isoamyl (meth)acrylate, stearyl (meth)acrylate, lauryl (meth)acrylate, octyl (meth)acrylate, decyl (meth)acrylate, isomyristyl (meth)acrylate, isostearyl (meth)acrylate, 2-ethylhexyl diglycol (meth)acrylate, 2-hydroxybutyl (meth)acrylate, 2-(meth)acryloyloxyethylhexahydrophthalic acid, butoxyethyl (meth)acrylate, ethoxydiethylene glycol (meth)acrylate, methoxydiethylene glycol (meth)acrylate, methoxypolyethylene glycol (meth)acrylate, methoxypropylene glycol (meth)acrylate, phenoxyethyl (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, 2-(meth)acryloyloxyethylsuccinic acid, 2-(meth)acryloyloxyethylphthalic acid, 2-(meth)acryloyloxyethyl-2-hydroxyethylphthalic acid, and t-butylcyclohexyl (meth)acrylate; bifunctional monomers such as triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethyloltricyclodecane di(meth)acrylate, PO adduct di(meth)acrylate of bisphenol A, hydroxypivalic acid neopentyl glycol di(meth)acrylate, and polytetramethylene glycol di(meth)acrylate; polyfunctional monomers of trifunctionality or higher functionality, such as trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerin propoxytri(meth)acrylate, and pentaerythritol ethoxytetra(meth)acrylate; and oligomers having a meth(acryloyl) group including polyester acrylate oligomer, and modified compounds of these compounds.

Examples of the modified product include ethylene oxide modified (EO modified) acrylate having an ethylene oxide group inserted, and propylene oxide modified (PO modified) acrylate having a propylene oxide inserted.

The photopolymerizable compound preferably includes a (meth)acrylate compound (hereinafter referred to simply as "(meth)acrylate compound A") having a molecular weight in the range of 280 to 1500 and a ClogP value in the range of 4.0 to 7.0.

It is more preferable that the (meth)acrylate compound A has two or more (meth)acrylate groups.

The molecular weight of the (meth)acrylate compound A is preferably in the range of 280 to 1500 as described above, more preferably in the range of 300 to 800.

In order to stably discharge the ink from the inkjet recording head, the viscosity of the ink at 80°C may be between 3 and 20 mPa·s, preferably between 7 and 14 mPa·s.

When the (meth)acrylate compound having a molecular weight of 280 or more and the gelling agent are included in the ink composition, the viscosity of the ink after landing is increased, and penetration of the ink into the recording medium may be suppressed, so that an effect of suppressing deterioration of curability is expected. On the other hand, by containing a (meth)acrylate compound having a molecular weight of 1500 or less, excessive increase in sol viscosity of the ink may be suppressed, and improvement in gloss uniformity of the coating film is expected.

Here, the molecular weight of the (meth)acrylate compound A may be measured using the following commercially available software package 1 or 2.

Software Package 1: MedChem Software (Release 3.54, August 1991, Medicinal Chemistry Project, Pomona College, Claremont, CA)
Software Package 2: Chem Draw Ultra ver. 8.0. (April 2003, CambridgeSoft Corporation, USA)

In an embodiment of the present invention, when the ink contains (meth)acrylate compound A as at least a part of the photopolymerizable compound, the glossiness value tends to be lower than that of the ink using (meth)acrylate compound having a ClogP value of less than 4.0 as the photopolymerizable compound. Therefore, it is preferable to use the ink for forming an image on a recording medium having a relatively low 60° gloss value before the corona discharge treatment because the difference in gloss between the printed portion and the non-printed portion may be reduced. Since the (meth)acrylate compound A is more hydrophobic than the (meth)acrylate compound having a ClogP value of less than 4.0, it is considered that more gelling agent is repelled to move to the cured film surfaces of the inks, and the glossiness value of the printing portion is lowered by increasing unevenness. Further, it is more preferable that the ClogP value of the (meth)acrylate compound A is in the range of 4.5 to 6.0.

Here, the "logP value" is a coefficient indicating the affinity of the organic compound for water and 1-octanol.

The 1-octanol/water partition coefficient P is the ratio of the equilibrium concentrations of the compounds in the respective solvents at the partition equilibrium when traces of the compounds are dissolved as solutes in a two-phase solvent of 1-octanol and water, expressed as their logarithmic logP to the base 10. That is, the "logP value" is the logarithmic value of the partition coefficient of 1-octanol/water and is known to be a significant parameter representing the hydrophobicity of molecules.

The "ClogP value" is a calculated logP value. ClogP values may be calculated by a fragment method, or an atomic approach method. More specifically, ClogP values may be calculated using the fragment method described in the document (C. Hansch and A. Leo, "Substituent Constants for Correlation Analysis in Chemistry and Biology", John Wiley & Sons, New York, 1969), or using software package 1 or 2 commercially available as described below.

Software Package 1: MedChem Software (Release 3.54, August 1991, Medicinal Chemistry Project, Pomona College, Claremont, CA)
Software Package 2: Chem Draw Ultra ver. 8.0. (April 2003, CambridgeSoft Corporation, USA)

The numerical value of the "ClogP value" according to the present invention is a "ClogP value" calculated by using the software package 2.

The amount of the (meth)acrylate compound A contained in the ink is not particularly limited, but it is preferably in the range of 1 to 40 mass% in the total mass of the ink, and more preferably in the range of 5 to 30 mass%. By setting the amount of the (meth)acrylate compound A to 1 mass % or more, the ink is not made too hydrophilic, and the gelling agent is sufficiently dissolved in the ink, so that the ink is liable to undergo sol-gel phase transition. On the other hand, by setting the amount of the (meth)acrylate compound A to 40 mass% or less, the photopolymerization initiator may be sufficiently dissolved in the ink.

More preferred examples of the (meta)acrylate compounds A include (1) a triple-functional or more methacrylate or acrylate compounds having 3 to 14 structures within the molecular represented by (-(C(CH₃)H-CH₂-O-), and (2) a bifunctional or more methacrylate or acrylate compounds having more than two functional cyclic structures within the molecule. These (meth)acrylate compounds have high photocuring ability and low shrinkage when cured. Furthermore, the repeatability of the sol-gel phase transition is high.

A tri- or more functional methacrylate or acrylate compound having 3 to 14 structures represented by (-C(CH₃)H-CH₂-O-) in the molecule is, for example, a compound having three or more hydroxy groups modified with propylene oxide, and the resulting modified product is esterified with (meth)acrylic acid.

Specific examples of this compound include:
3PO modified trimethylolpropane triacrylate Photomer 4072 (molecular weight: 471, ClogP: 4.90, made by Cognis Co. Ltd.); and
3PO modified trimethylolpropane triacrylate Miramer M360 (molecular weight: 471, ClogP: 4.90, made by Miwon Co. Ltd.).

A bifunctional or more methacrylate or acrylate compound having a cyclic structure in the molecule is, for example, a compound obtained by esterifying a hydroxy group of a compound having two or more hydroxy groups and a tricycloalkane with (meth) acrylic acid.

Specific examples of this compound include:
Tricyclodecanedimethanol diacrylate NK-ester A-DCP (molecular weight: 304, ClogP: 4.69); and
Tricyclodecanedimethanol dimethacrylate NK-ester DCP (molecular weight: 332, ClogP: 5.12).

Another exemplary (meta)acrylate compound A also includes a 1,10-decanediol dimethacrylate NK ester DOD-N (molecular weight: 310, ClogP: 5.75, made by Shin-Nakamura Chemical Co., Ltd.).

The photopolymerizable compound may further include a photopolymerizable compound other than the (meth)acrylate compound A.

Other photopolymerizable compounds include, for example, (meth)acrylate monomers or oligomers with ClogP values less than 4.0, (meth)acrylate monomers or oligomers with ClogP values greater than 7.0, and other polymerizable oligomers.

Examples of these (meth)acrylate monomers or oligomers are 4EO modified hexanediol diacrylate (CD561, made by Sartomer Co. Ltd., molecular weight: 358); 3EO modified trimethylol propane triacrylate (SR454, made by Sartomer Co. Ltd., molecular weight: 429); 4EO modified pentaerythritol tetraacrylate (SR494, made by Sartomer Co. Ltd., molecular weight: 528); 6EO modified trimethylol propane triacrylate (SR499, made by Sartomer Co. Ltd., molecular weight: 560); caprolactone acrylate (SR495B, made by Sartomer Co. Ltd., molecular weight: 344); polyethylene glycol diacrylate (NK ester A-400, made by Shin-Nakamura Chemical Co. Ltd., molecular weight: 508), (NK ester A-600, made by Shin-Nakamura Chemical Co. Ltd., molecular weight: 708); polyethylene glycol dimetahcylate (NK ester 9G, made by Shin-Nakamura Chemical Co. Ltd., molecular weight: 536), (NK ester 14G, made by Shin-Nakamura Chemical Co. Ltd); tetraethylene glycol diacrylate (V#335HP, made by Osaka Organic Chemical Co., Ltd., molecular weight: 302); stearyl acrylates (STAs, made by Osaka Organic Chemical Co. Ltd.); phenolic EO-modified acrylates (M144, made by Miwon Co. Ltd.); and nonylphenol EO-modified acrylates (M166, made by Miwon Co. Ltd.).

Examples of other polymerizable oligomers include epoxy acrylates, aliphatic urethane acrylates, aromatic urethane acrylates, polyester acrylates, and linear acrylic oligomers.

### (Cationic polymerizable compound)

Examples of the cationic polymerizable compound applicable to the present invention include epoxy compounds, vinyl ether compounds, and oxetane compounds.

The cationic polymerizable compound may be included alone in the ink, or two or more kinds thereof may be included in the ink.

Examples of the epoxy compounds include aromatic epoxides, alicyclic epoxides, and aliphatic epoxides, and in order to increase curability, aromatic epoxides and alicyclic epoxides are preferred.

The aromatic epoxide may be a di- or poly-glycidyl ether obtainable by reacting a polyhydric phenol or an alkylene oxide adduct thereof with epichlorohydrin.

Examples of the polyhydric phenol or an alkylene oxide adduct thereof to be reacted include bisphenol A or an alkylene oxide adduct thereof.

The alkylene oxide in the alkylene oxide adduct may be ethylene oxide or propylene oxide.

The alicyclic epoxide may be a cycloalkane oxide-containing compound obtainable by epoxidizing a cycloalkane-containing compound with an oxidizing agent such as hydrogen peroxide or a peracid. The cycloalkane in the cycloalkane oxide-containing compound may be cyclohexene or cyclopentene.

The aliphatic epoxide may be a di- or poly-glycidyl ether obtainable by allowing an aliphatic polyhydric alcohol or an alkylene oxide adduct thereof to react with epichlorohydrin.

Examples of the aliphatic polyhydric alcohol include alkylene glycols such as ethylene glycol, propylene glycol, and 1,6-hexanediol. The alkylene oxide in the alkylene oxide adduct may be ethylene oxide or propylene oxide.

Examples of the vinyl ether compound include monovinyl ethers such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, isopropenyl ether-o-propylene carbonate, dodecyl vinyl ether, diethylene glycol monovinyl ether, and octadecyl vinyl ether; and di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether. Among these vinyl ether compounds, di- or tri-vinyl ether compounds are preferred in view of curability and adhesiveness.

The oxetane compound is a compound having an oxetane ring, and examples thereof include the oxetane compounds described in Japanese Patent Application Publication (JP-A) Nos. 2001-220526, 2001-310937, and 2005-255821. Among the foregoing, cited are the compound represented by Formula (1) given in paragraph No. (0089) of JP-A No. 2005-255821, the compound represented by Formula (2) given in paragraph No. (0092), the compound represented by Formula (7) in paragraph No. (0107), the compound represented by Formula (8) in paragraph No. (0109), and the compound represented by Formula (9) in paragraph No. (0116) of the same Patent Literature. Formulas (1), (2) and (7) to (9) described in JP-ANo. 2005-255821 are presented below.

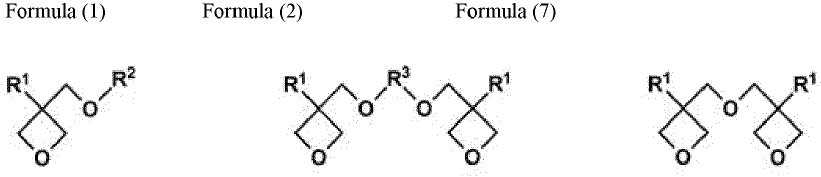

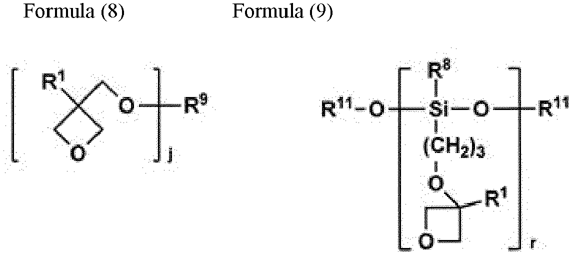

The details of R¹, R², R³, R⁸, R⁹ and R¹¹ in Formulas (1), (2) and (7) to (9) are identical with the description described in JP-A 2005-255821. The description will be omitted here.

### [Photopolymerization initiator]

The ink according to the present invention contains a photopolymerization initiator. As the photopolymerization initiator according to the present invention, when the ink according to the present invention contains a radical polymerizable compound as a photopolymerizable compound, it is preferable to apply a photo radical polymerization initiator, and when ink contains a cationic polymerizable compound as the photo polymerizable compound, it is preferable to apply a photo cationic polymerization initiator.

### (Photo-radical polymerization initiator)

Radical photopolymerization initiators include intramolecular bond cleavage type initiators and intramolecular hydrogen abstraction type initiators.

Examples of the intramolecular bond cleavage type photopolymerization initiators include acetophenone compounds such as diethoxyacetophenone, 2-hydroxy-2-methyl-l-phenylpropan-l-one, benzyl dimethyl ketal, 1 -(4-isopropylphenyl)-2-hydroxy-2-methylpropan-1 -one, 4-(2-hydroxyethoxy)phenyl (2-hydroxy-2-propyl)ketone, 1-hydroxycyclohexyl phenyl ketone, 2-methyl-2-morpholino(4-thiomethylphenyl)propan-l-one, and 2-benzyl-2-dimethylamino-1-(4-morpholinophenyl)butanone; benzoins such as benzoin, benzoin methyl ether, and benzoin isopropyl ether; and acylphosphine oxide compounds such as 2,4,6-trimethylbenzoin diphenylphosphine oxide; benzil; and methyl phenyl glyoxy esters.

Examples of the intramolecular hydrogen abstraction type photopolymerization initiators include benzophenone compounds such as benzophenone, o-benzoylbenzoic acid methyl-4-phenyl benzophenone, 4,4'-dichlorobenzophenone, hydroxybenzophenone, 4-benzoyl-4'-methyldiphenyl sulfide, acrylated benzophenone, 3,3',4,4'-tetra(t-butylperoxycarbonyl)benzophenone, and 3,3'-dimethyl-4-methoxybenzophenone; thioxanthone compounds such as 2-isopropylthioxanthone, 2,4-dimethyl thioxanthone, 2,4-diethylthioxanthone, and 2,4-dichlorothioxanthone; aminobenzophenone compounds such as Michler's ketone and 4,4'-diethylaminobenzophenone; 10-butyl-2-chloroacridone, 2-ethylanthraquinone, 9,10-phenanthrenequinone, and camphor-quinone.

Among them, acyl phosphine oxide and acyl phosphonate are preferably used in view of reactivity.

Specific examples are: bis(2,4,6-trimethylbenzoyl)-phenyl phosphine oxide and bis(2,6-dimethoxybenzoyl)-2,4,4-trimethyl-pentyl phosphine oxide.

### (Photo-cationic polymerization initiator)

In the present invention, it is preferable to apply a photoacid generator as a photocationic polymerization initiator.

Examples of the photoacid generator that may be used include the compounds used in chemically amplified photoresists or photocationic polymerization (see Japanese Research Association for Organic Electronics Materials, Ed. "Organic Materials for Imaging", Bunshin Publishing Company (1993), pp. 187-192). The suitable compounds for the present invention are described in the following.

First, B(C₆F₅)₄⁻, PF₆⁻, AsF₆⁻, SbF₆⁻, CF₃SO₃" salts of aromatic onium compounds such as diazonium, ammonium, iodonium, sulfonium, and phosphonium may be cited.

As specific examples of the onium compounds that may be used in the present invention, the compounds described in paragraph No. (0132) of JP-A 2005-255821 may be mentioned.

As specific compounds of the sulfonated compound that generates a sulfonic acid, which is mentioned as a second example, the compounds described in paragraph No. (0136) of JP-A 2005-255821 may be mentioned.

Third, a halide which photo-generates a hydrogen halide may also be used. As specific compounds thereof, the compounds described in paragraph No. (0138) of JP-A2005-255821 may be mentioned.

Fourth, iron-allene complexes described in paragraph No. (0140) of JP-A 2005-255821 may be mentioned.

### (Addition amount of photopolymerization initiator)

In the ink set of the present invention, a value of a mass ratio of a content of the photopolymerization initiator in the white ink to a content of the photopolymerization initiator in the colored ink, namely in (white ink/colored ink), is in the range of 0. 10 to 0.90, and the content of the photopolymerization initiator in the white ink is in the range of 0.3 to 2.7 mass% based on the total mass of the ink.

Further, in the inkjet recording method described below, a white ink is printed on a recording medium, and then a colored ink is printed. In a preferred embodiment, a value of a mass ratio of the content of the photopolymerization initiator in (white ink/colored ink) is set in the range of 0.30 to 0.70.

Further, when a colored ink is printed on a recording medium, and then printing the white ink is printed, and then irradiating with an active ray collectively to record an image, the value of the mass ratio of the content of photopolymerization initiator in (white ink/colored ink) is preferably set in the range of 0.20 to 0.60.

By setting the above conditions, it is possible to form an inkjet image having excellent abrasion resistance and adhesion of the formed image.

### (Photopolymerization initiator aid and Polymerization inhibitor)

The ink according to the present invention may further include a photopolymerization initiator aid and a polymerization inhibitor according to necessary. The photopolymerization initiator aid may be a tertiary amine compound, and is preferably an aromatic tertiary amine compound. Examples of the aromatic tertiary amine compound include N,N-dimethylaniline, N,N-diethylaniline, N,N-dimethyl-p-toluidine, N,N-dimethylamino-p-benzoic acid ethyl ester, N,N-dimethylamino-p-benzoic acid isoamyl ethyl ester, N,N-dihydroxyethylaniline, triethylamine, and N,N-dimethylhexylamine. Among the foregoing, N,N-dimethylamino-p-benzoic acid ethyl ester and N,N-dimethylamino-p-benzoic acid isoamyl ethyl ester are preferred. These compounds may be used singly, or two or more kinds may be used in combination.

Examples of the polymerization inhibitor include (alkyl)phenol, hydroquinone, catechol, resorcin, p-methoxyphenol, t-butylcatechol, t-butylhydroquinone, pyrogallol, 1,1-picrylhydrazyl, phenothiazine, p-benzoquinone, nitrosobenzene, 2,5-di-tert-butyl-p-benzoquinone, dithiobenzoyl disulfide, picric acid, cupferron, aluminum N-nitrosophenylhydroxylamine, tri-p-nitrophenylmethyl, N-(3 -oxyanilino-1,3 -dimethylbutylidene)aniline oxide, dibutylcresol, cyclohexanone oxime cresol, guaiacol, o-isopropylphenol, butyraldoxime, methyl ethyl ketoxime, and cyclohexanone oxime.

### [Color material]

In the ink constituting the ink set of the present invention, as a color material constituting the ink, a dye or a pigment may be used without limitation, but it is preferable to use a pigment having good dispersion stability with respect to the ink component, and having good weather resistance.

In the ink constituting the ink set of the present invention, the white ink contains titanium oxide as a white pigment, and the colored ink contains a colored material.

### (White ink)

The white ink according to the present invention preferably contains titanium oxide as a white pigment, and 50 mass% or more of the titanium oxide is preferably rutile titanium dioxide. The titanium oxide applied to the present invention is preferably surface-modified with alumina, silica, zinc, zirconia, or an organic substance.

The average particle diameter of the titanium oxide particles according to the present invention is preferably in the range of 50 to 500 nm, and more preferably in the range of 100 to 300 nm. By adjusting the average particle diameter of the titanium oxide particles in the range defined above, the effects of the present invention are remarkably exhibited. In addition, suppression of nozzle clogging in the inkjet head, storage stability of the inkjet white ink (in particular, suppression of sedimentation), and shielding power to the print substrate may be sufficiently exhibited.

The titanium oxide particles applicable to the present invention are also commercially available. Examples thereof are CR-50, CR-57, CR-58, CR-67, CR-Super-70, CR-80, CR-90, CR-90-2, CR-93, CR-95, CR-EL, R- 550, R-580, R-630, R-670, R-680, R-780, R-820, R-830, R-850, R-930, R-980, PF-736, PF-737, and PF-742 (made by Ishihara Sangyo Kaisha, Ltd); and SR-41, R-5N, R-7E, R-11P, R-21, R-25, R-32, R-42, R-44, R-45M, R-62N, R-310, R- 650, TCR-52, GTR-100, D-918, and FTR-700 (made by Sakai Chemical Industry Co., Ltd.).

The addition amount of titanium oxide in the white ink according to the present invention is preferably in the range of 5.0 to 35 mass%, more preferably 10 to 20 mass%, with respect to the total mass of the ink. By adjusting the addition amount of titanium oxide in the white ink according to the present invention to the range defined above, it is possible to achieve both the storage stability of the white ink (particularly, the suppression of sedimentation) and the shielding property to the print substrate.

In the white ink according to the present invention, known white pigments other than the titanium oxide according to the present invention may be used in combination as needed. As other white pigments applicable to the present invention, for example, inorganic white pigments, organic white pigments, and white hollow polymer fine particles may be used.

Examples of the inorganic white pigment include, sulfates of alkaline earth metals such as barium sulfate, carbonates of alkaline earth metals such as calcium carbonate, silica such as fine powder silicic acid and synthetic silicates, calcium silicate, alumina, alumina hydrates, zinc oxide, talc, and clay.

### (Colored ink)

The colored ink according to the present invention further includes a color material.

The color material used in the present invention may be a dye or a pigment without limitation, but from the viewpoint of having satisfactory dispersibility in the constituent components of the ink and having excellent weather resistance, a pigment is preferred. There are no particular limitations on the pigment; examples thereof include organic pigments or inorganic pigments assigned the numbers that are described in the Color Index.

Examples of red or magenta pigments include: Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, and 257; Pigment Violet 3, 19, 23, 29, 30, 37, 50, and 88; and Pigment Orange 13, 16, 20, and 36 and the mixture thereof.

Examples of blue or cyan pigments include Pigment Blue 1, 15, 15:1, 15:2, 15:3, 15:4, 15:6, 16, 17-1, 22, 27, 28, 29, 36, and 60 and the mixture thereof.

Examples of green pigments include Pigment Green 7, 26, 36, and 50 and the mixture thereof.

Examples of yellow pigments include Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, and 193 and the mixture thereof.

Examples of black pigments include Pigment Black 7, 28, and 26 and the mixture thereof.

Examples of commercially available pigment products include CHROMOFINE YELLOW 2080, 5900, 5930, AF-1300, and 2700L; CHROMOFINE ORANGE 3700L and 6730; CHROMOFINE SCARLET 6750; CHROMOFINE MAGENTA 6880, 6886, 6891N, 6790, and 6887; CHROMOFINE VIOLET RE; CHROMOFINE RED 6820 and 6830; CHROMOFINE BLUE HS-3, 5187, 5108, 5197, 5085N, SR-5020, 5026, 5050, 4920, 4927, 4937, 4824, 4933GN-EP, 4940, 4973, 5205, 5208, 5214, 5221, and 5000P; CHROMOFINE GREEN 2GN, 2GO, 2G-550D, 5310, 5370, and 6830; CHROMOFINE BLACK A-1103; SEIKA FAST YELLOW 10 GH, A-3, 2035, 2054, 2200, 2270, 2300, 2400(B), 2500, 2600, ZAY-260, 2700(B), and 2770; SEIKA FAST RED 8040, C405(F), CA120, LR-116, 1531B, 8060R, 1547, ZAW-262, 1537B, GY, 4R-4016, 3820, 3891, andZA-215; SEIKA FAST CARMINE 6B1476T-7, 1483LT, 3840, and 3870; SEIKA FAST BORDEAUX 10B-430; SEIKA LIGHT ROSE R40; SEIKA LIGHT VIOLET B800 and 7805; SEIKA FAST MAROON 460N; SEIKA FAST ORANGE 900 and 2900; SEIKA LIGHT BLUE C718 and A612; Cyanine Blue 4933M, 4933GN-EP, 4940, and 4973 (manufactured by Dainichiseika Color & Chemicals Manufacturing Co., Ltd.); KET Yellow 401, 402, 403, 404, 405, 406, 416, and 424; KET Orange 501; KET Red 301, 302, 303, 304, 305, 306, 307, 308, 309, 310, 336, 337, 338, and 346; KET Blue 101, 102, 103, 104, 105, 106, 111, 118, and 124; KET Green 201 (manufactured by Dainippon Ink & Chemicals, Inc.); COLORTEX Yellow 301, 314, 315, 316, P-624, 314, U10GN, U3GN, UNN, UA-414, and U263; FINECOL Yellow T-13 and T-05; Pigment Yellow 1705; COLORTEX Orange 202; COLORTEX Red 101, 103, 115, 116, D3B, P-625, 102, H-1024, 105C, UFN, UCN, UBN, U3BN, URN, UGN, UG276, U456, U457, 105C, and USN; COLORTEX Maroon 601; COLORTEX Brown B610N; COLORTEX Violet 600; Pigment Red 122; COLORTEX Blue 516, 517, 518, 519, A818, P-908, and 510; COLORTEX Green 402 and 403; COLORTEX Black 702; U905 (manufactured by Sanyo Color Works, Ltd.); LIONOL Yellow 1405G; LIONOL Blue FG7330, FG7350, FG7400G, FG7405G, ES, and ESP-S (manufactured by Toyo Ink Group); Toner Magenta E02; Permanent Rubin F6B; Toner Yellow HG; Permanent Yellow GG-02; HOSTAPEAM Blue B2G (manufactured by Hoechst Industry, Ltd.); NOVOPERM P-HG; HOSTAPERM Pink E; HOSTAPERM Blue B2G (manufactured by Clariant International, Ltd.); carbon black #2600, #2400, #2350, #2200, #1000, #990, #980, #970, #960, #950, #850, MCF88, #750, #650, MA600, MA7, MA8, MA11, MA100, MA100R, MA77, #52, #50, #47, #45, #45L, #40, #33, #32, #30, #25, #20, #10, #5, #44, and CF9 (manufactured by Mitsubishi Chemical Corp.).

In addition, as dyes, conventionally known yellow dyes, magenta dyes, cyan dyes, and black dyes may be applied.

### <Dispersion method of Pigment>

When the pigment is used as a color material of the white ink and the colored ink, examples of the dispersion methods used to prepare the inks are ball mill, sand mill, attritor, roll mill, agitator, HENSCHEL mixer, colloid mill, ultrasonic homogenizer, pearl mill, wet jet mill, or paint shaker.

As the dispersion conditions of the pigment, it is preferable that the dispersion is performed so that the volume average particle diameter of pigment particles becomes in the range of 0.08 to 0.5 µm, and the maximum particle diameter becomes in the range of 0.3 to 10 µm, more preferably in the range of 0.3 to 3 µm.

The dispersion of the pigment may be adjusted by the selection of the pigment, the dispersing agent and the dispersing medium, the dispersing conditions, and the filtering conditions to obtain a pigment dispersion having a desired particle size.

### (Dispersant aid of pigment)

The ink according to the present invention may further include a dispersant in order to increase dispersibility of the pigment. Examples of the dispersant include hydroxyl group-containing carboxylic acid esters, salts of long-chain polyaminoamides and high-molecular weight acid esters, salts of high-molecular weight polycarboxylic acids, salts of long-chain polyaminoamides and polar acid esters, high molecular weight unsaturated acid esters, polymer copolymerization products, modified polyurethanes, modified polyacrylates, polyether ester type-anionic active agents, naphthalenesulfonic acid-formalin condensate salts, aromatic sulfonic acid-formalin condensate salts, polyoxyethylene alkyl phosphoric acid esters, polyoxyethylene nonyl phenyl ethers, and stearyl amine acetates. Examples of commercially available dispersant products include SOLSPERSE series of Avecia Biotechnology, Inc., and PB series of Ajinomoto Fine-Techno Co., Inc.

### [Gelling agent]

In the ink set of the present invention, at least the white ink contains a gelling agent, and the content of the gelling agent in the white ink is preferably in the range of 0.3 to 2.5 mass% based on the total mass of the ink. Further, a preferred embodiment is a configuration in which all of the white ink and the colored ink contain a gelling agent.

In the ink set of the present invention, at least the white ink contains a gelling agent from the viewpoint of suppressing excessive wetting and spreading of the ink droplets landed on the recording medium and making it easy to obtain a high-definition image.

The gelling agent is an organic substance which becomes solid at normal temperature and becomes a liquid when heated, and is an additive having a function of causing the ink to reversibly undergo a sol-gel phase transition depending on the temperature.

When the gelling agent crystallizes in the ink, crystals which are crystallization products of the gelling agent form a space surrounded three-dimensionally. The structure thus formed may be referred to as a "card-house structure". The card-house structure can retain the unreacted radically polymerizable compound and the unreacted photopolymerization initiator, thereby enhancing the pinning property of the ink droplet. As a result, the unity of adjacent ink droplets may be suppressed.

Furthermore, at room temperature, the active ray curable inkjet ink containing the gelling agent is crystallized and has a high viscosity, so that the molecular motion of the photopolymerization initiator is easily suppressed. As a result, storage stability is less likely to be lost even when the ink is stored for a long time at room temperature.

In order to stably eject ink droplets from the inkjet recording apparatus, it is required that compatibility between the radically polymerizable compound and the gelling agent is good in a sol-state ink (at high temperature, for example, about 80 °C).

Examples of a gelling agent suitable for forming a card-house structure are: aliphatic ketone compounds; aliphatic ester compounds; petroleum-based waxes such as paraffin wax, microcrystalline wax, and petrolatum; plant waxes such as candelilla wax, carnauba wax, rice wax, wood wax, jojoba oil, jojoba solid wax, and jojoba esters; animal waxes such as beeswax, lanolin and whale wax; mineral waxes such as montan wax and hydrogenated waxes; hardened castor oil or hardened castor oil derivatives; modified waxes such as montan wax derivatives, paraffin wax derivatives, microcrystalline wax derivatives, and polyethylene wax derivatives; higher fatty acids such as behenic acid, arachidic acid, stearic acid, palmitic acid, myristic acid, lauric acid, oleic acid, and erucic acid; higher alcohols such as stearyl alcohol and behenyl alcohol; hydroxystearic acid such as 12-hydroxystearic acid; 12-hydroxystearic acid derivatives; fatty acid amides such as lauric acid amide, stearic acid amide, behenic acid amide, oleic acid amide, erucic acid amide, ricinolic acid amide, and 12-hydroxystearic acid amide (for example, NIKKAMIDE series manufactured by Nippon Kasei Chemical Co., Ltd.; ITOHWAX series manufactured by Itoh Oil Chemicals Co., Ltd., and FATTYAMID series manufactured by Kao Corp.); N-substituted fatty acid amides such as N-stearylstearic acid amide and N-oleylpalmitic acid amide; specific fatty acid amides such as N,N'-ethylenebis(stearylamide), N,N'-ethylenebis(12-hydroxystearylamide), and N,N'-xylenebisstearyl amide; higher amines such as dodecylamine, tetradecylamine, and octadecyl amine; fatty acid ester compounds such as a stearylstearic acid, an oleylpalmitic acid, glycerin fatty acid esters, sorbitan fatty acid esters, propylene glycol fatty acid esters, ethylene glycol fatty acid esters, and polyoxyethylene fatty acid esters (for example, EMALLEX series produced by Nippon Emulsion Co., Ltd., RIKEMAL series produced by Riken Vitamin Co., Ltd., and POEM series produced by Riken Vitamin Co., Ltd); sucrose fatty acid esters such as sucrose stearate and sucrose palmitate (e.g., RYOTO Sugar Ester series, manufactured by Mitsubishi Kagaku Foods Corp.); synthetic waxes such as polyethylene wax and α-olefin-maleic anhydride copolymer wax (e.g., UNILIN series, manufactured by Baker Petrolite Corp.); dimer acids; and dimer diols (e.g., PRIPOR series, manufactured by Croda International PLC); fatty acid inulin such as stearic acid inulin; dextrin fatty acid esters such as dextrin palmitate and dextrin myristate (e.g., RHEOPEARL series, manufactured by Chiba Flour Milling Co., Ltd.); glyceryl behenate eicosanedioate and polyglyceryl eicosane behenate (e.g., NOMCORT series, manufactured by Nisshin Oillio Group, Ltd.); amide compounds such as N-lauroyl-L-glutamic acid dibutylamide and N-(2-ethylhexanoyl)-L-glutamic acid dibutylamide (available from Ajinomoto Fine-Techno Co., Inc.); dibenzylidene sorbitols such as 1,3:2,4-bis-O-benzylidene-D-glusitol (GEL ALL D, available from New Japan Chemical Co., Ltd.); and low-molecular weight oil gelling agents described in JP-A Nos. 2005-126507, 2005-255821 and 2010-111790.

The gelling agent preferably contains a linear or branched hydrocarbon group having a carbon number of 9 to 25 from the viewpoint of easily forming the above-mentioned "card-house structure".

Among them, aliphatic ketones having a structure represented by Formula (G1) and aliphatic esters having a structure represented by Formula (G2) are particularly preferable.

Formula (G1): R₁-CO-R₂

Formula (G2): R₃-COO-R₄

In Formula (G1) or (G2), R₁ to R₄ each independently represent a linear or branched hydrocarbon group having a carbon number in the range of 9 to 25. The hydrocarbon group is preferably an alkyl group.

The hydrocarbon group represented by R₁ and R₂ in the Formula (G1) is not particularly limited, but is preferably a linear or branched hydrocarbon group having 12 to 25 carbon atoms. More preferably, it is an alkyl group having 12 to 25 carbon atoms containing a linear or a branched moiety.

Examples of the aliphatic ketone compound represented by Formula (G1) include 18-pentatriacontanone (C17-C17), Diglyceryl ketone (C24-C24), dibehenyl ketone (C22-C22), distearyl ketone (C18-C18), dieicosyl ketone (C20-C20), dipalmityl ketone (C16-C16), dimyristyl Ketone (C14-C14), dilauryl ketone (C12-C12), lauryl myristyl ketone (C12-C14), lauryl palmityl ketone (C12-C16), myristyl palmityl ketone (C14-C16), myristyl stearyl ketone (C14 -C18), myristyl behenyl ketone (C14-C22), palmityl stearyl ketone (C16-C18), palmityl behenyl ketone (C16-C22), and stearyl behenyl ketone (C18-C22).

Examples of commercially available products of the compound represented by Formula (G1) include 18-Pentatriacontanon (manufactured by Alfa Aeser Co., Ltd.), Hentriacontan-16-on (manufactured by Alfa Aeser Co., Ltd.), and KAO-WAX T1 (manufactured by Kao Corp.). The aliphatic ketone contained in the ink may be one kind or a mixture of two or more kinds.

The hydrocarbon group represented by R₃ and R₄ in Formula (G2) is not particularly limited, but is preferably a linear or branched hydrocarbon group having 12 to 25 carbon atoms. More preferably, it is an alkyl group having 12 to 25 carbon atoms containing a linear or branched moiety.

Examples of the aliphatic ester compound represented by Formula (G2) include behenyl behenate (C21-C22), icosyl icosanoate (C19-C20), stearyl stearate (C17-C18), palmityl stearate (C17-C16), lauryl stearate (C17-C12), cetyl palmitate (C15-C16), stearyl palmitate (C15-C18), myristyl myristate (C13-C14), cetyl myristate (C13-C16), octyl dodecyl myristate (C13-C20), lauryl laurate (C11-C12), cetyl caprate (C9-C16), stearyl oleate (C17-C18), stearyl erucate (C21-C18), stearyl linolate (C17-C18), behenyl oleate (C18-C22), myricyl cerotate (C25-C16), stearyl montanate (C27-C18), behenyl montanate (C27-C22), and arachidyl linolate (C17-C20).

Examples of commercially available products of the compound represented by Formula (G2) include UNISTAR M-2222SL (manufactured by NOF Corp.), EXCEPARL SS (manufactured by Kao Corp., melting point: 60° C), EMALEX CC-18 (manufactured by Nihon-Emulsion Co., Ltd.), AMREPS PC (manufactured by Kokyu Alcohol Kogyo Co., Ltd.), EXCEPARL MY-M (manufactured by Kao Corp.), SPERMACETI (manufactured by NOF Corp.), and EMALEX CC-10 (manufactured by Nihon Emulsion Co., Ltd.). Since many of these commercially available products are mixtures of two or more kinds, the commercially available products may also be used after being subjected to separation and purification as necessary.

The gelling agent contained in the inks may one kind or a mixture of two or more kinds.

It is preferable that the gelling agent in the white ink is contained in the range of 0.3 to 2.4 mass% with respect to the total mass of the ink. When the content of the gelling agent is 0.3 mass% or more, the pinning properties of the ink may be sufficiently increased, and a higher definition image maybe formed. When the content of the gelling agent is 2.5 mass% or less, precipitation of the gelling agent from the surface of the formed image may be suppressed, and the adhesion of the formed image may be improved.

### [Other constituting components in ink set (ink)]

The inks that constitute the ink set of the present invention may further contain other components as necessary. The other components may be various additives or other resins. Examples of the additives include surfactants, leveling agents, matting agents, ultraviolet absorbers, infrared absorbers, antibacterial agents, and basic compounds for enhancing the storage to stability of ink. Examples of the basic compounds include basic alkali metal compounds, basic alkaline earth metal compounds, and basic organic compounds such as amines. Examples of the other resins include resins for regulating the properties of a cured film, and examples thereof include polyester resins, polyurethane resins, vinyl resins, acrylic resins, and rubber resins.

### (Physical properties of ink)

From the viewpoint of further enhancing the ejection ability from the inkjet head, the viscosity at 80 °C of each ink according to the present invention is preferably in the range of 3 to 20 mPa·s, and more preferably in the range of 7 to 9 mPa·s. In addition, from the viewpoint of causing the ink to gel sufficiently when it lands and is cooled to normal temperature, the viscosity at 25°C of the ink according to the present invention is preferably 1000 mPa·s or more.

Moreover, in the ink containing the gelling agent, degelling and regelling in the range of 40 to 90°C is preferable from the viewpoint of durability of the inkjet head and in that it may be prevented from becoming mixed and bleeding due to the gel state at the time of landing.

That is, in the ink according to the present invention, the ink containing the gelling agent can undergo a sol-gel phase transition reversibly with temperature. Sol-gel phase transition type active ray curable ink is a sol at a high temperature (for example, about 80 °C), so it may be ejected from an ink ejection recording head, but after being landed on a recording medium, it is naturally cooled to become a gel state. Thereby, the unity of adjacent ink droplets may be suppressed, and the image quality may be enhanced.

Viscosity of the ink at 80°C, and viscosity and gelling temperature of the ink at 25°C may be determined by measuring a change in dynamic viscoelasticity of the ink with temperature using a rheometer.

### «Inkjet recording method»

The inkjet recording method of the present invention uses the above-described ink set of the present invention, and the method comprising the steps of: landing ink droplets of the white ink and the colored ink on a recording medium by an inkjet method: and irradiating each ink droplet of the white ink and the colored ink with active rays to cure the image and record the image.

In the step of landing each ink on a recording medium, ink droplets of the white ink and the colored ink are ejected from an inkjet head to land on the recording medium. At this time, it is essential that the ink droplets land on a position corresponding to the image to be formed on the recording medium.

The ejection stability may be enhanced by discharging the ink droplets from the inkjet head in a heated state. The temperature of the ink at the time of ejection is preferably in the range of 35 to 100 °C, and from the viewpoint of further enhancing the ejection stability, it is more preferably in the range of 35 to 80°C. From the viewpoint of further improving the ejection stability, it is preferable to perform ejection at an ink temperature such that the viscosity of the ink is in the range of 7 to 15 mPa·s, more preferably in the range of 8 to 13 mPa·s.

An example of a method of heating the inkjet ink to a predetermined temperature include a method to heat to a predetermined temperature at least one of an ink tank constituting the head carriage, an ink supply system such as a supply pipe and an ink chamber in the front chamber immediately before the head, a pipe with a filter, and a piezo head.

From the viewpoint of increasing the recording speed and enhancing the image quality, an amount of the droplets of the ink when ejected is preferably in the range of 2 to 20 pL.

The discharge system from the inkjet head may be either an on-demand system or a continuous system. Examples of the on-demand system include: electro-mechanical conversion systems including single cavity type, double cavity type, bender type, piston type, shear mode type and shared wall type; electro-thermal conversion systems including thermal inkjet type and bubble jet (registered trademark).

In the next step, each colored ink that has landed on the recording medium is irradiated with active rays to form a cured image.

In this step, the inks landed in the previous step are irradiated with active rays to form a cured film constituting an image. By irradiating the inks o with active rays, the inks are cured to form a cured film.

Examples of active rays that may be applied to the inks include electron beams, ultraviolet rays, α-rays, γ-rays, and X rays. Among these, from the viewpoint of ease of handling and less influence on the human body, it is preferable to irradiate ultraviolet rays. The light source is preferably a light emitting diode (LED) from the viewpoint of suppressing the occurrence of curing failure of the ink due to melting of the inks by radiant heat of the light source. Examples of the LED light sources that enables to irradiate ultraviolet light to form a cured film include water-cooled LED, 395 nm, manufactured by Phoseon Technology.

From the viewpoint of further suppressing irradiation of radiant heat to the inks, it is preferable that the LED light source is configured to emit ultraviolet light in the range of 370 to 410 nm at a peak illuminance of 0.5 to 10 W/cm² on the image surface. It is more preferable to be configured to set in the range of 1 to 5 W/cm². Alternatively, it is preferable that the light amount irradiated to the image is set to be less than 350 mJ/cm².

The transport speed of the recording medium is preferably in the range of 30 to 120 m/min from the viewpoint of high speed recording.

### (Recoding medium)

The recording medium used in the inkjet recording method according to the present invention may be any as long as an image may be formed by the inks according to the present invention. Examples of the recording medium include non-absorptive recording media composed of plastics such as polyester, polyvinyl chloride, polyethylene, polyurethane, polypropylene, acrylic resin, polycarbonate, polystyrene, acrylonitrile-butadiene-styrene copolymer, polyethylene terephthalate and polybutadiene terephthalate; non-absorptive inorganic recording media composed of metals and glasses; and papers (for example, coated paper for printing, and coated paper B for printing). Among them, it is preferably used for an OK top coat paper and a Mali coat paper for which coating with overcoat liquid is required.

Ink droplets are deposited on the recording medium by discharging the ink droplets from the inkjet recording head. It is preferable that the temperature of the recording medium is set in the range of 20 to 50 °C when the ink droplets land in order to form a high quality image with good repeatability.

### [Inkjet recording apparatus]

An active ray curable inkjet recording apparatus using the ink set of the present invention will be described.

There exist a line recording system (single pass recording system, line head system) and a serial recording system for an inkjet recording apparatus of an active ray curable inkjet system. It may be selected according to the resolution of the image to be obtained and the recording speed, but from the viewpoint of high speed recording, the line recording method (single pass recording method, line head method) is preferable.

Next, representative examples (Embodiments 1 to 3) of an inkjet recording method using the ink set of the present invention will be described with reference to the drawings.

### [Embodiment 1] (not according to claim 1)

The first method (Embodiment 1) of the inkjet recording method of the present invention is a method of using a white ink and a colored ink each satisfying the constitution specified in the present invention without containing gelling agent. This method applies pinning by irradiate weak active rays (e.g., LEDs) each time each colored ink is landed on a recording medium in order to prevent deterioration of image quality due to liquid deviation, color bleeding, and color mixing of an ink image formed by ink droplets, in order to reduce fluidity by semi-curing the ink.

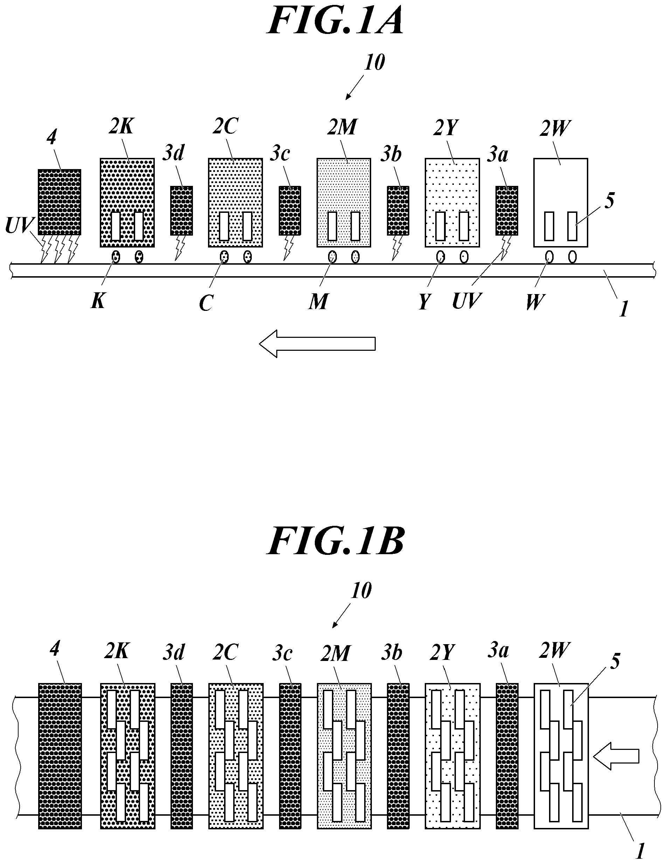

Fig. 1A and Fig. 1B are general configuration diagrams illustrating an exemplary configuration of a main part of an inkjet recording apparatus of a line recording method employing pinning applicable to the inkjet recording method of the present invention.

Fig. 1A is a schematic side view of an inkjet recording apparatus (10), and Fig. 1B is a top view thereof.

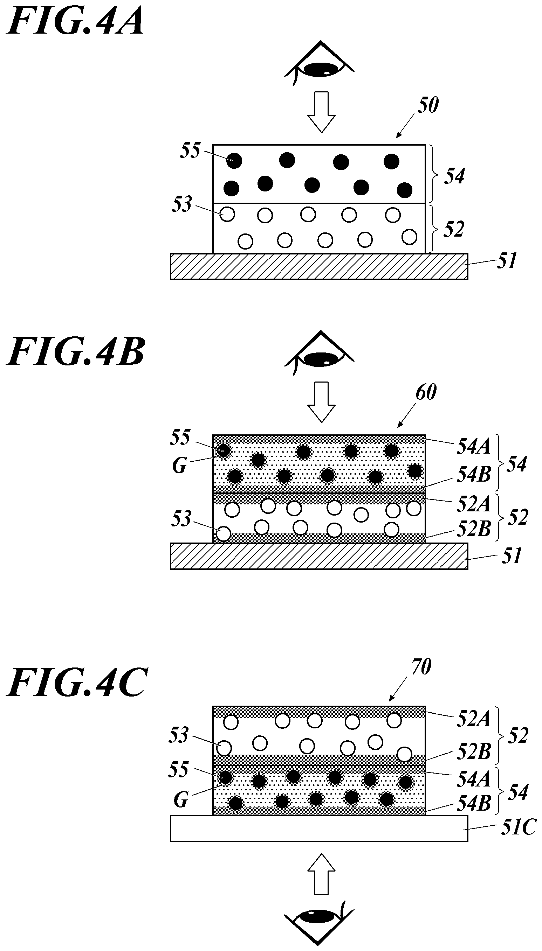

As illustrated in FIG. 1A and FIG. 1B, a white head carriage (2W) that discharges white ink (W) without contain a gelling agent from an ink head (5), a yellow head carriage (2Y) that discharges yellow ink (Y) from an ink head (5), a magenta head carriage (2M) that discharges magenta ink (M) from an ink head (5), a cyan head carriage (2C) that discharges cyan ink (C) from an ink head (5), and a black carriage (2K) that discharges black ink (K) from an ink head (5) are arranged from the upstream side in the conveying direction (arrow) of the recording medium (1). Downstream of the head carriages for the respective colors of 2W, 2Y, 2M, 2C, a low-power active ray irradiation light source (3a to 3d) for semi-curing the respective ink droplets landed on the recording medium (1) is disposed to perform pinning. Next, black ink (K) is ejected to form an inkjet recording image (50) in which a white ink layer (52) and a colored ink layer (54) are laminated on a recording medium (51) as illustrated in FIG. 4A. In FIG. 4A, 53 is a titanium oxide particle which is a white pigment, and 55 is a colored pigment particle.

Finally, a high-power active ray irradiation light source (4) is arranged to perform the main curing.

As in the inkjet recording apparatus (10) illustrated in Fig. 1B, a head carriage (2W to 2K) that accommodates a plurality of ink heads (5) is fixedly disposed so as to cover the entire width of the recording medium (1) and accommodates a plurality of ink heads (5) for ink discharge provided for each ink. Each colored ink is supplied to the ink head (5) for ejection. For example, ink may be supplied directly or by an ink supply means (not shown) from an ink cartridge (not shown) detachably mounted on the inkjet recording apparatus (10).

When the active ray is an ultraviolet ray, examples of low-power active ray irradiation light source (3a to 3d) and high-power active ray irradiation light source (4) include fluorescent tubes (low pressure mercury lamps, sterilizing lamps), cold cathode tubes, ultraviolet lasers, low pressure, medium pressure, high pressure mercury lamps, metal halide lamps, and LEDs having operating pressures of several hundred Pa or more and up to 1 MPa or less. From the viewpoint of curability, an ultraviolet ray irradiating unit for irradiating ultraviolet rays having an illuminance 100 mW/cm² or more; specifically, a high-pressure mercury lamp, a metal halide lamp, and an LED are preferable, and an LED is more preferable from the viewpoint of consumption power and small radiant heat.

When the active ray is an electron beam, examples of the active ray irradiator 18 (electron beam irradiator) include electron beam irradiators of a scanning method, a curtain beam method, and a broad beam method. From the viewpoint of processing capacity, the electron beam irradiator of the curtain beam method is preferred. Examples of the electron beam irradiating unit include "Curetron EBC-200-20-30" manufactured by Nisshin High Voltage Co., Ltd., and "Min-EB" manufactured by AIT Co., Ltd.

In the inkjet recording method shown in Embodiment 1, from the viewpoint of enhancing the curability of the ink, it is preferable that the low-output active ray for pinning is irradiated within the range of 0.001 to 1.0 seconds after the ink landing, and from the viewpoint of forming a higher-definition image, it is more preferable that the active ray is irradiated within the range of 0.001 to 0.5 seconds. In addition, it is preferable that the high-power active ray be irradiated within the range of 0.001 to 1.0 seconds after all the ink droplets are deposited on the recording medium, and it is more preferable that the high-power active ray be irradiated within the range of 0.001 to 0.5 seconds from the viewpoint of forming a higher-definition image.

### <Effect in Embodiment 1>

In Embodiment 1, by setting a value of a mass ratio of the content of the photopolymerization initiator of the white ink containing titanium oxide as a coloring material to the content of the photopolymerization initiator in the colored ink used for image formation, namely in (white ink/colored ink), within the range of 0.10 to 0.90, and setting the content of the photopolymerization initiator in the white ink within the range of 0.3 to 2.7 mass% of the total mass of the white ink, sufficient surface strength can be obtained, and the abrasion resistance and adhesion between the interlayer or white ink layer (52) and the recording medium (51) can be improved.

### [Embodiment 2]

The second method (Embodiment 2) of the inkjet recording method of the present invention is a method of using a white ink and a colored ink each satisfying the constitution specified in the present invention and containing a gelling agent. In this method, first, a white ink layer is formed by discharging a white ink on a recording medium, and then a colored ink layer is formed by discharging a colored ink thereon. Thin method prevents deterioration of image quality due to liquid deviation, color bleeding, and color mixing of an ink image to be formed, and improves abrasion resistance, adhesion between ink layers or between a white ink layer and a recording medium.

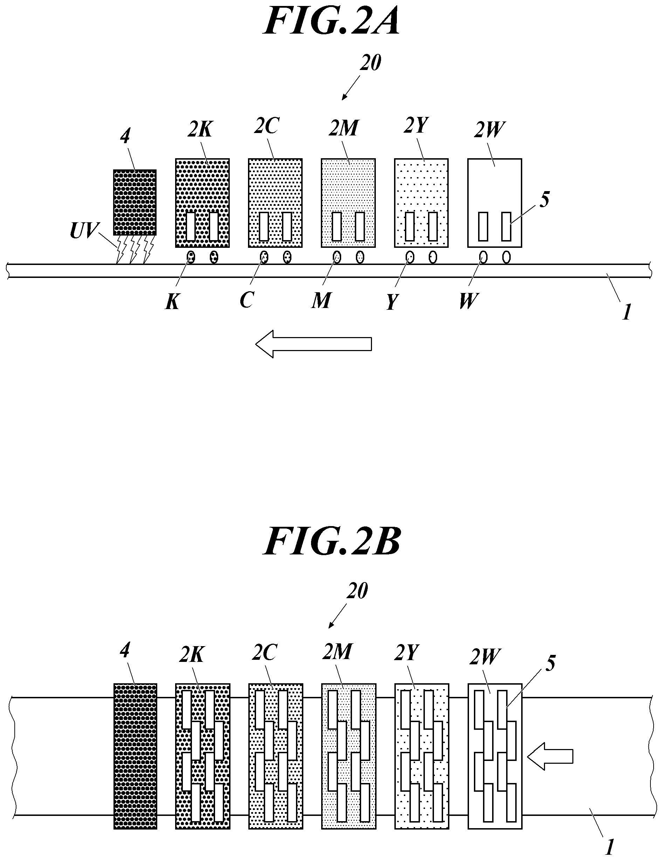

FIG. 2A and FIG. 2B are general configuration diagrams showing examples of the configuration of main parts of an inkjet recording apparatus of a line recording system using a white ink and a colored ink, which contain a gelling agent applicable to the inkjet recording method. In this method, a white ink layer is formed first on a recording medium, and then a colored ink layer is formed thereon.

Fig. 2A is a schematic side view of an inkjet recording apparatus (20), and Fig. 2B is a top view thereof.

As indicated in FIG. 2A and FIG. 2B, in Embodiment 2, the following inks are arranged from the upstream side with respect to the conveying direction (arrow) of the recording medium (1): a white head carriage (2W) which discharges a first ink (W) containing a gelling agent from an ink head (5); a yellow head carriage (2Y) which discharges a yellow ink (Y) from an ink head (5); a magenta head carriage (2M) which discharges a magenta ink (M) from an ink head (5); a cyan head carriage (2C) which discharges a cyan ink (C) from an ink head (5); and a black head carriage (2K) which discharges a black ink (K) from an ink head (5). At the most downstream side, a high-output active ray irradiation light source (4) is arranged, and photo-curing is performed. As shown in FIG. 4B, an inkjet recording image (60) in which a white ink layer (52) containing a gelling agent and a colored ink layer (54) are laminated on a recording medium (51) is formed.

In the inkjet recording method indicated in Embodiment 2 of the present invention, from the viewpoint of enhancing the curability of the ink, the irradiation with active radiation is preferably performed within 10 seconds, preferably within 0.001 to 5 seconds, and more preferably within 0.01 to 2 seconds after all the ink droplets have been deposited on the recording medium. The irradiation of the active ray is preferably performed after the ink is ejected from all the ink heads accommodated in the head carriage.

### [Effect of Embodiment 2]

In the inkjet recording method of forming the colored ink layer after the white ink layer is formed using the ink containing the gelling agent as shown in Embodiment 2, as indicated in FIG. 4B, in the colored ink layer (54) having the colored pigment (55) located on the surface portion, the interaction between the colored pigment (55) and the gelling agent is strong, the gelling agent (G) is more adsorbed on the surface of the pigment particles (55), and the crystallized regions (54A, 54B) containing a large amount of the gelling agent in the surface region are thin.

On the other hand, titanium oxide (53), which constitutes a white ink, has a more hydrophilic particle surface compared to other colored pigments (yellow pigment, magenta pigment, cyan pigment, and black pigment). Therefore, the interaction with the coexisting gelling agent is weak. Therefore, the gelling agent is more easily deposited on the surface area (52A, 52B) of the lower print layer (52) compared to the upper print layer (54).

As a result, when the adhesion is evaluated by the abrasion resistance test and the tape peeling method, in the lower print layer (52) disposed between the recording medium (51) and the upper print layer (54), peeling tends to occur at the interface between the recording medium (51) located at the lower part or the upper print layer (54) located at the upper part.

In view of the above circumstances, in the ink set of the present invention, in the inkjet recording method shown in Embodiment 2 in which the white ink containing the gelling agent is printed, and then the colored ink containing the gelling agent is printed, and then the image is recorded by irradiating the active ray collectively, sufficient surface strength can be obtained, and adhesion between the layers or between the white ink layer (52) and the recording medium (51) can be improved by setting the value of the mass ratio of the content of the photopolymerization initiator in the white ink to the content of the photopolymerization initiator in the colored ink, namely in (white ink/colored ink), to be within the range of 0.30 to 0.70, and setting the content of the gelling agent in the white ink to be within the range of 0.3 to 2.5 mass% with respect to the total mass of the white ink.

### [Embodiment 3]

A third method (Embodiment 3) of the inkjet recording method of the present invention is a method of using a white ink and a colored ink each satisfying the constitution specified in the present invention and containing a gelling agent. Inn this method, first, a colored ink layer is formed by discharging colored ink on a recording medium, and then a white ink layer is formed by discharging a white ink. This method prevents deterioration of image quality due to liquid deviation, color bleeding, and color mixing of an ink image to be formed, and improves abrasion resistance and adhesion between ink layers or between a white ink layer and a recording medium.

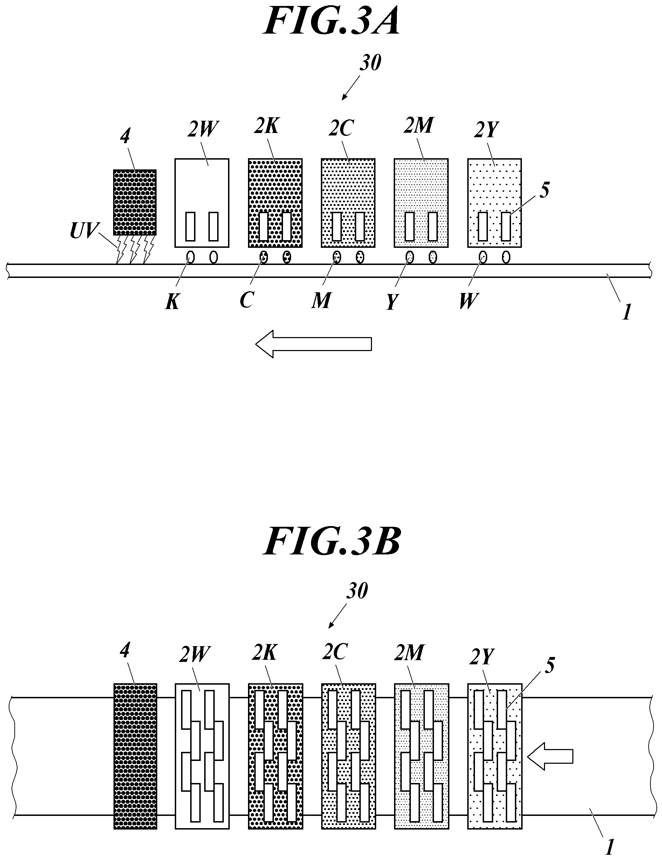

FIG. 3A and FIG. 3B are general configuration diagrams showing examples of configurations of main parts of an inkjet recording apparatus of a line recording system using a white ink and a colored ink which contain a gelling agent applicable to the inkjet recording method of the present invention, in which a colored ink layer is formed first on a recording medium, and then a white ink layer is formed thereon.

FIG. 3A is a schematic side view of the inkjet recording apparatus (30), and FIG. 3B is a top view thereof.

As indicated in FIG. 3A and FIG. 3B, in Embodiment 3, the following inks are arranged from the upstream side with respect to the conveying direction (arrow) of the recording medium (1) having transparency: a yellow head carriage (2Y) which discharges a yellow ink (Y) from an ink head (5); a magenta head carriage (2M) which discharges a magenta ink (M) from an ink head (5); a cyan head carriage (2C) which discharges a cyan ink (C) from an ink head (5); a black head carriage (2K) which discharges a black ink (K) from an ink head (5); and a white head carriage (2W) which discharges a white ink (W) from an ink head (5) each respectively containing a gelling agent. At the most downstream side, a high-power active ray irradiation light source (4) is disposed to perform photocuring. As indicated in FIG. 4C, an inkjet recording image (70) in which a colored ink layer (54) and a white ink layer (52) each containing a gelling agent are laminated on a light transmitting recording medium (51C) is formed.

In the inkjet recording method indicated in Embodiment 3, from the viewpoint of enhancing the curability of the ink, the irradiation with active ray irradiation is preferably performed within 10 seconds, preferably within 0.001 to 5 seconds, and more preferably within 0.01 to 2 seconds after all the ink droplets have been deposited on the recording medium. The irradiation of the active ray is preferably performed after the ink is ejected from all the ink heads accommodated in the head carriage.

### <Effect of Embodiment 3>

In the inkjet recording method as shown in Embodiment 3 using inks containing gelling agent, after firstly forming the colored ink layer (54), then the white ink layer (52) is formed. In this method, as indicated in FIG. 4C, in the case of the white ink located on the surface portion, as in Embodiment 2, the particle surface of titanium oxide (53) is more hydrophilic, so that the interaction with the co-existing gelling agent is weak. Therefore, the gelling agent is more easily deposited on the surface regions (52A, 52B) of the white ink layer (52).

As a result, when an abrasion resistance test and an evaluation of adhesiveness by a tape peeling method were performed, the white ink layer (52) disposed on the colored ink layer (54) of the light transmitting recording medium (51C) tends to peel off at the interface of the colored ink layer (54).

In view of the above circumstances, in the ink set of the present invention, in the inkjet recording method shown in Embodiment 3 in which the colored ink is printed first, then the white ink is printed, and then the image is recorded by irradiating the active ray collectively, the value of the mass ratio of the content of the photopolymerization initiator in the white ink to the content of the photopolymerization initiator in the colored ink, namely in (white ink/colored ink), is set within the range of 0.20 to 0.60, and the content of the gelling agent in the white ink is set within the range of 0.3 to 2.5 mass% with respect to the total mass of the white ink, whereby sufficient surface strength can be obtained, and the abrasion resistance and the adhesion between the white ink layer (52) and the colored ink layer (54) can be improved.

### [Image recording conditions of white ink and colored ink containing gelling agent]

The temperature of the ink in the ink head at the time of ejecting the ink from the ink head is preferably set to a temperature in the range of 10 to 30 °C higher than the gelation temperature of the ink in order to enhance the ink ejection property.

An amount of droplet ejected from each nozzle of the ink head is preferably in the range of 0.5 to 10 pL, although it depends on the viscosity of the ink. In order to discharge only to a desired region, it is more preferably in the range of 0.5 to 4.0 pL, and still more preferably in the range of 1.5 to 4.0 pL. Even when such an amount of ink is applied, since the sol-gel phase transition is performed in the ink according to the present invention, the ink does not spread excessively and may be ejected only to a desired location.

The ink droplets deposited on the recording medium are cooled and gelled rapidly due to the sol-gel phase transition. Thus, the ink droplets may be pinned without being excessively spread. Furthermore, since the droplets turn in a gel rapidly and the viscosity increases, oxygen is less likely to enter the ink surface deposited on the recording medium, and the curing of the ink surface is less likely to be inhibited by oxygen.

Here, by discharging ink droplets from the ink head, the ink droplets adhere to the recording medium. It is preferable that the temperature of the recording medium when the ink droplets adhere is set to a temperature lower than the gelation temperature of the ink by a range of 10 to 20 °C.

When the active ray is an electron beam, the acceleration voltage for electron beam irradiation is preferably in the range of 30 to 250 kV, and more preferably in the range of 30 to 100 kV, in order to achieve sufficient curing. When the accelerating voltage is in the range of 100 to 250 kV, the electron beam irradiation dose is preferably in the range of 30 to 100 kGy, and more preferably in the range of 30 to 60 kGy.

The total ink film thickness after curing is preferably in the range of 2 to 25 µm. The "total ink film thickness" is the maximum value of the ink film thickness drawn on the recording medium.

In Embodiments 1 to 3 shown in FIGS. 1A to 4C, the inkjet recording method of the line recording type inkjet recording apparatus has been described. A serial recording type inkjet recording apparatus may be applied as long as the conditions defined in the present invention are satisfied. In the present invention, the description of the serial recording type inkjet recording apparatus is omitted.

### Examples

Hereinafter, the present invention will be specifically described by way of examples, but the present invention is not limited thereto. In addition, although the term "part" or"%" is used in examples, unless otherwise indicated, it represents "part by mass" or "mass%." Also, unless otherwise stated, each operation was performed at room temperature (25 °C).

### Example 1 (not according to claim 1)

According to the following method, images 1 to 5 were formed by pinning without the gelling agent corresponding to Embodiment 1.

### «Preparation of Pigment Dispersion»

### (Preparation of Black dispersion)

In a stainless steel beaker were placed 71 parts by mass of tripropylene glycol diacrylate and 9 parts by mass of Ajisper PB 824 (Ajinomoto Fine Techno Co., Ltd.) as a dispersant, and the mixture was stirred for 1 hour while heating on a hot plate at 65 °C to dissolve dispersant.

Subsequently, after cooling the obtained dispersant solution to room temperature, 20 parts by mass of Pigment Black 7 (# 52; Mitsubishi Chemical Corporation) as a black pigment was added, and the liquid mixture was prepared.

Then, the mixed solution was put in a glass bottle together with 200 g of zirconia beads having a diameter of 0.5 mm, and the container was sealed and dispersed for 5 hours with a paint shaker. The zirconia beads were removed from the dispersion to prepare a black (K) pigment dispersion.

### (Preparation of White dispersion)

A white (W) dispersion was obtained in the same manner as in the preparation of the above black dispersion, except that titanium oxide (TCR-52; Sakai Chemical Industry Co., Ltd.) was used as a white pigment in place of the black pigment and the addition amount was changed to 60 parts by mass.

### <<Preparation of Each ink>>

In accordance with the composition (the unit is mass%) described in Table I, a white dispersion or a black dispersion, a photopolymerizable compound, a polymerization initiator 1, a surfactant 1, and a polymerization inhibitor 1 were mixed, and the mixture was stirred while heated to 80 °C. Next, in a heated state, the mixture was filtered using a 3 µm membrane filter (Advantech Toyo Co., Ltd.) made of Teflon (registered trademark). Thus, a black ink K1 which is a colored ink and white inks W1 to W5 having the constitutions indicated in Table I were prepared.

**Table I**

| Unit: "Mass%" except *1 | | | | | | | |
|---|---|---|---|---|---|---|---|
| Ink No. | | K 1 | W1 | W2 | W3 | W4 | W5 |
| Pigment dispersion | Black dispersion | 15.0 | - | - | - | - | - |
| | White dispersion | - | 25.0 | 25.0 | 25.0 | 25.0 | 25.0 |
| Photopolymerizable compound | Compound 1 | 40.0 | 40.0 | 40.0 | 40.0 | 40.0 | 40.0 |
| | Compound 2 | 41.7 | 34.5 | 34.4 | 33.2 | 32.0 | 31.7 |
| Photopolymerization initiator 1 | | 3.0 | 0.2 | 0.3 | 1.5 | 2.7 | 3.0 |
| Surfactant 1 | | 0.1 | 0.1 | 0.1 | 0.1 | 0.1 | 0.1 |
| Polymerization inhibitor 1 | | 0.2 | 0.2 | 0.2 | 0.2 | 0.2 | 0.2 |
| Total mass | | 100.0 | 100.0 | 100.0 | 100.0 | 100.0 | 100.0 |
| Characteristic value | *1 | - | 0.07 | 0.10 | 0.50 | 0.90 | 1.00 |
| | *2 | 3.0 | 0.2 | 0.3 | 1.5 | 2.7 | 3.0 |

| | | | | | | | |
|---|---|---|---|---|---|---|---|
| *1 : PI ratio = (Photopolymerization initiator in white ink)/ (Photopolymerization initiator in black ink) (Mass ratio) *2 : Content of Photopolymerization initiator | | | | | | | |

The details of the additives described in the above Table I in an abbreviated form are as follows.

### <Photopolymerizable compounds>

Compound 1: N-vinylcaprolactam (made by BASF)
Compound 2: Tripropane glycol diacrylate (made by Shin-Nakamura Chemical Co. Ltd.)

### <Photopolymerization initiator>

Photopolymerization initiator 1: IRGACURE TPO (made by BASF)

### <Others>

Surfactant 1: BYK UV3500 (made by BYK Chemie Japan)
Polymerization inhibitor 1: Irgatab UV10 (made by BASF)

### «Inkjet image recording»

### (Inkjet recording apparatus)

Each ink set composed of a combination of the prepared black ink K1 (colored ink) and white inks W1 to W5 was loaded into a line type inkjet recording apparatus having an ink jet recording head equipped with a piezo type inkjet nozzle.

The ink supply system contains an ink tank, an ink flow path, a sub-ink tank just before the inkjet recording head, a piping with a filter, and a piezo head. The temperature was heated so that the temperature from the ink tank to the head portion was 40 °C, and the temperature of the recording medium carrier was 40 °C.

### (Inkjet Image Recording)

### <Formation of Image 1>

A 100% white solid image having a size of 3 cm x 3 cm was formed on an A4 size aluminum vapor-deposited paper (HIPIKAEF2 made by Tokushu Tokai Paper Co., Ltd.) by using a white ink W1. Then, the formed white image was provisionally exposed (pinned) at a light amount of 100 mJ/cm² with an ultraviolet irradiation unit (LED lamp manufactured by Phoseon Technology).

Next, a 100% solid image having a size of 3 cm x 3 cm was formed using the black ink K1 so as to overlap the solid image formed with the semi-cured white ink W1. Thereafter, an image 1 was formed by irradiating light (395 nm, 4 W/cm², water cooled unit) with an ultraviolet irradiation unit (LED lamp made by Phoseon Technology) to cure.

The ink head used a head of a resolution of 360 dpi with a multi-drop of 6 to 42 pL, and one head was used for each color. The ink was ejected with a resolution of 360 x 360 dpi, and the drive waveform and voltage were appropriately adjusted so that the coverage of the black ink K1 was 9.5 g/m² and the coverage of the white ink W1 was 10.0 g/ₘ².

The integrated light amount was appropriately adjusted by changing the conveyance speed of the recording medium so as to be 500 mJ/cm², and was measured using an ultraviolet integrated light amount meter C9536 and H9958 manufactured by Hamamatsu Photonics.

In the formation of the image 1, the Y ink, the M ink, and the C ink were not ejected from the inkjet head.

### <Formation of Image 2 to 5>

Images 2 to 5 were formed in the same manner as in the formation of the image 1 except that the white ink W1 was changed to the white inks W2 to W5, respectively.

### «Evaluation of Formed Images»

The images 1 to 5 thus formed were evaluated as follows.

### (Evaluation of abrasion resistance)

From the upper edge to the lower edge of each formed ink image (3 cm x 3 cm) were rubbed three times with a nail, and the presence or absence of scratches on the image surface and the magnitude of the white spot failure were visually observed, and the abrasion resistance was evaluated according to the following criteria.

AA: No scratches or white spots occurred
BB: Slight scratch is observed on the image surface, but no white spot failure occurs
CC: Occurrence of white spot failure of less than 0.5 cm in length is observed
DD: Occurrence of white spot failure with a length of 0.5 cm or more is observed.

In the above-mentioned evaluation rank, when it was CC, BB or AA, it was judged that it was within a practically acceptable range.

### (Evaluation of adhesiveness: Tape peeling test)

A cellophane adhesive tape was adhered to each of the formed ink images (3 cm x 3 cm) by 2 cm and rubbed with an eraser from the upper surface. After peeling, the surface condition of the image was visually observed, and the adhesiveness was evaluated according to the following criteria.

AA: No change is observed in the ink image
BB: A slight tape mark remains on the ink image
CC: Slight peeling of the image occurs in a part of the ink image, and the density is partially reduced.
DD: Most of the ink image is peeled off, and a white background or the lower layer ink image of the recording medium is observed.

In the above-mentioned evaluation rank, when it was CC, BB or AA, it was judged that it was within a practically acceptable range.

The results obtained are indicated in Table II.

**Table II**

| Image No. | Image composition | | Abrasion resistance | Adhesiveness | Remarks |
|---|---|---|---|---|---|
| | Black ink | White ink | | | |
| 1 | K 1 | W1 | DD | DD | Comparative example |
| 2 | K 1 | W2 | CC | AA | Present invention |
| 3 | K 1 | W3 | BB | AA | Present invention |
| 4 | K 1 | W4 | AA | BB | Present invention |
| 5 | K 1 | W5 | CC | DD | Comparative example |

As is apparent from the results indicated in Table II, it can be seen that the image formed using the white ink and the colored ink (black ink) satisfying the conditions defined in the present invention is an image having excellent abrasion resistance and adhesion compared with the comparative example.

### Example 2

According to the following method, a white ink image was formed with an ink containing the gelling agent corresponding to Embodiment 2, and then a colored ink image (black ink image) was laminated thereon to form images 11 to 20.

### <<Preparation of Each ink>>

In accordance with the composition (the unit is mass%) described in Table III, a white dispersion or a black dispersion prepared in Example 1, a photopolymerizable compounds 1 to 3, a polymerization initiator 2, a surfactant 1, and a polymerization inhibitor 1, gelling agent G1 and G2 were mixed, and the mixture was stirred while heated to 80 °C. Next, in a heated state, the mixture was filtered using a 3 µm membrane filter (Advantech Toyo Co., Ltd.) made of Teflon (registered trademark). Thus, a black ink K2 which is a colored ink and white inks W11 to W20 having the constitutions indicated in Table III were prepared.

**Table III**

| Unit: "Mass%" except *1 | | | | | | | | | | | | |
|---|---|---|---|---|---|---|---|---|---|---|---|---|
| Ink No. | | K2 | W11 | W12 | W13 | W14 | W15 | W16 | W17 | W18 | W19 | W20 |
| Pigment dispersion | Black dispersion | 15.0 | - | - | - | - | - | - | - | - | - | - |
| | White dispersion | - | 25.0 | 25.0 | 25.0 | 25.0 | 25.0 | 25.0 | 25.0 | 25.0 | 25.0 | 25.0 |
| Photopolymerizable compound | Compound 1 | 5.0 | 5.0 | 5.0 | 5.0 | 5.0 | 5.0 | 5.0 | 5.0 | 5.0 | 5.0 | 5.0 |
| | Compound 2 | 38.7 | 31.8 | 31.4 | 31. 1 | 30.5 | 29.9 | 29.6 | 29.0 | 32.9 | 32.2 | 30.7 |
| | Compound 3 | 35.0 | 35.0 | 35.0 | 35.0 | 35.0 | 35.0 | 35.0 | 35.0 | 35.0 | 35.0 | 35.0 |
| Photopolymerization initiator 2 | | 3.0 | 0.2 | 0.6 | 0.9 | 1.5 | 2. 1 | 2.4 | 3.0 | 1.5 | 1.5 | 1.5 |
| Surfactant 1 | | 0.1 | 0.1 | 0.1 | 0.1 | 0.1 | 0.1 | 0.1 | 0.1 | 0.1 | 0.1 | 0.1 |
| Polymerization inhibitor 1 | | 0.2 | 0.2 | 0.2 | 0.2 | 0.2 | 0.2 | 0.2 | 0.2 | 0.2 | 0.2 | 0.2 |
| Gelling agent | G 1 | 1.5 | 1.2 | 1.2 | 1.2 | 1.2 | 1.2 | 1.2 | 1.2 | 0.1 | 0.5 | 1.2 |
| | G 2 | 1.5 | 1.5 | 1.5 | 1.5 | 1.5 | 1.5 | 1.5 | 1.5 | 0.2 | 0.5 | 1.3 |
| Total mass | | 100.0 | 100.0 | 100.0 | 100.0 | 100.0 | 100.0 | 100.0 | 100.0 | 100.0 | 100.0 | 100.0 |
| Characteristic value | *1 | - | 0.07 | 0.20 | 0.30 | 0.50 | 0.70 | 0.80 | 1.00 | 0.50 | 0.50 | 0.50 |
| | *2 | 3.0 | 0.2 | 0.6 | 0.9 | 1.5 | 2. 1 | 2.4 | 3.0 | 1.5 | 1.5 | 1.5 |
| | *3 | 3.0 | 2.7 | 2.7 | 2.7 | 2.7 | 2.7 | 2.7 | 2.7 | 0.3 | 1.0 | 2.5 |

| | | | | | | | | | | | | |
|---|---|---|---|---|---|---|---|---|---|---|---|---|
| *1: PI ratio = (Photopolymerization initiator in white ink)/ (Photopolymerization initiator in black ink) (Mass ratio) *2: Content of Photopolymerization initiator *3: Content of gelling agent | | | | | | | | | | | | |

The details of each of the addditives abbreviated in Table III other than those described in Example 1 are as follows.
Photopolymerizable Compound 3: 3PO modified trimethylolpropane triacrylate, Miramer M360 (made by MIWON Co. Ltd.)
Photopolymerization initiator 2: IRGACURE 819 (made by BASF)
Gelling agent G1: WEP2 (made by Nippon Oil Corporation)
Gelling agent G2: EMALEX EG-di-S (made by Nippon Emulsion Co., Ltd.)

### «Inkjet image recording»

### (Inkjet recording apparatus)

Each ink set composed of a combination of the prepared black ink K2 (colored ink) and white inks W11 to W20 was loaded into a line type inkjet recording apparatus having an inkjet recording head equipped with a piezo type inkjet nozzle.

The ink supply system contains an ink tank, an ink flow path, a sub-ink tank just before the inkjet recording head, a piping with a filter, and a piezo head. The temperature was heated so that the temperature from the ink tank to the head portion was 40 °C, and the temperature of the recording medium carrier was 40 °C.

### (Inkjet Image Recording)

### <Formation of Image 11>

A 100% white solid image having a size of 3 cm x 3 cm was formed on an A4 size aluminum vapor-deposited paper (HIPIKAEF2 made by Tokushu Tokai Paper Co., Ltd.) by using a white ink W11. Then, a 100% solid image having a size of 3 x 3 cm was formed using the black ink K2 so as to overlap the solid image formed with the white ink W11, and then cured within 5 seconds using the following ultraviolet irradiation unit. Thus, an image 11 was formed.

The ink head used a head of a resolution of 360 dpi with a multi-drop of 6 to 42 pL, and one head was used for each color. The ink was ejected with a resolution of 360 x 360 dpi, and the drive waveform and voltage were appropriately adjusted so that the coverage of the black ink K1 was 9.5 g/m² and the coverage of the white ink W1 was 10.0 g/m².

Each ink was cured by irradiating light (395 nm, 4 W/cm², water cooled unit) with an ultraviolet irradiation unit (LED lamp manufactured by Phoseon Technology). The integrated light amount was appropriately adjusted by changing the conveyance speed of the recording medium so as to be 500 mJ/cm², and was measured using an ultraviolet integrated light amount meter C9536 and H9958 manufactured by Hamamatsu Photonics.

In the formation of the image 11, the Y ink, the M ink, and the C ink were not ejected from the inkjet head.

### <Formation of Image 12 to 20>

Images 12 to 20 were formed in the same manner as in the formation of the image 11 except that the white ink W11 was changed to the white inks W12 to W20, respectively.

### «Evaluation of Formed Images»

The formed images 11 to 20 were evaluated for abrasion resistance and adhesiveness in the same manner as in Example 1, and the obtained results are indicated in Table IV

**Table IV**

| Image No. | Image composition | | Abrasion resistance | Adhesiveness | Remarks |
|---|---|---|---|---|---|
| | Black ink | White ink | | | |
| 11 | K2 | W1 1 | DD | DD | Comparative example |
| 12 | K2 | W12 | CC | CC | Present invention |
| 13 | K2 | W13 | CC | CC | Present invention |
| 14 | K2 | W14 | BB | CC | Present invention |
| 15 | K2 | W15 | AA | CC | Present invention |
| 16 | K2 | W16 | AA | CC | Present invention |
| 17 | K2 | W17 | CC | DD | Comparative example |
| 18 | K2 | W18 | BB | AA | Present invention |
| 19 | K2 | W19 | BB | BB | Present invention |
| 20 | K2 | W20 | BB | BB | Present invention |

As is clear from the results indicated in Table IV, the images formed using the white ink and the colored ink (black ink) containing the gelling agent satisfying the conditions specified in the present invention were excellent in abrasion resistance and adhesion compared with the comparative examples.

### Example 3

According to the following method, a colored ink image (black ink image) was formed on a light transmitting recording medium with an ink containing the gelling agent corresponding to Embodiment 3, and then a white ink image was laminated thereon to form images 21 to 30.

### «Preparation of Each ink»

In accordance with the composition (the unit is mass%) described in Table V, a white dispersion or a black dispersion prepared in Example 1, a photopolymerizable compounds 1 to 3, a polymerization initiator 2, a surfactant 1, and a polymerization inhibitor 1, gelling agent G1 and G2 were mixed, and the mixture was stirred while heated to 80 °C. Next, in a heated state, the mixture was filtered using a 3 µm membrane filter (Advantech Toyo Co., Ltd.) made of Teflon (registered trademark). Thus, a black ink K3 which is a colored ink and white inks W21 to W30 having the constitutions indicated in Table V were prepared.

**Table V**

| Unit: "Mass%" except *1 | | | | | | | | | | | | |
|---|---|---|---|---|---|---|---|---|---|---|---|---|
| Ink No. | | K 3 | W21 | W22 | W23 | W24 | W25 | W26 | W27 | W28 | W29 | W30 |
| Pigment dispersion | Black dispersion | 15.0 | - | - | - | - | - | - | - | - | - | - |
| | White dispersion | - | 25.0 | 25.0 | 25.0 | 25.0 | 25.0 | 25.0 | 25.0 | 25.0 | 25.0 | 25.0 |
| Photopolymerizable Compound | Compound 1 | 5.0 | 5.0 | 5.0 | 5.0 | 5.0 | 5.0 | 5.0 | 5.0 | 5.0 | 5.0 | 5.0 |
| | Compound 2 | 38.7 | 31.8 | 31.6 | 31.4 | 30.5 | 30.2 | 29.9 | 29.0 | 32.9 | 32.2 | 30.7 |
| | Compound 3 | 35.0 | 35.0 | 35.0 | 35.0 | 35.0 | 35.0 | 35.0 | 35.0 | 35.0 | 35.0 | 35.0 |
| Photopolymerization initiator 2 | | 3.0 | 0.2 | 0.4 | 0.6 | 1.5 | 1.8 | 2.1 | 3.0 | 1.5 | 1.5 | 1.5 |
| Surfactant 1 | | 0.1 | 0.1 | 0.1 | 0.1 | 0.1 | 0.1 | 0.1 | 0.1 | 0.1 | 0.1 | 0.1 |
| Polymerization inhibitor 1 | | 0.2 | 0.2 | 0.2 | 0.2 | 0.2 | 0.2 | 0.2 | 0.2 | 0.2 | 0.2 | 0.2 |
| Gelling agent | G1 | 1.5 | 1.2 | 1.2 | 1.2 | 1.2 | 1.2 | 1.2 | 1.2 | 0.1 | 0.5 | 1.2 |
| | G2 | 1.5 | 1.5 | 1.5 | 1.5 | 1.5 | 1.5 | 1.5 | 1.5 | 0.2 | 0.5 | 1.2 |
| Total mass | | 100.0 | 100.0 | 100.0 | 100.0 | 100.0 | 100.0 | 100.0 | 100.0 | 100.0 | 100.0 | 100.0 |
| Characteristic value | *1 | - | 0.07 | 0.13 | 0.20 | 0.50 | 0.60 | 0.70 | 1.0 | 0.50 | 0.50 | 0.50 |
| | *2 | 3.0 | 0.2 | 0.4 | 0.6 | 1.5 | 1.8 | 2.1 | 3.0 | 1.5 | 1.5 | 1.5 |
| | *3 | 3.0 | 2.7 | 2.7 | 2.7 | 2.7 | 2.7 | 2.7 | 2.7 | 0.3 | 1.0 | 2.5 |

| | | | | | | | | | | | | |
|---|---|---|---|---|---|---|---|---|---|---|---|---|
| *1: PI ratio = (Photopolymerization initiator in white ink)/(Photopolymerization initiator in black ink) (Mass ratio) *2: Content of Photopolymerization initiator *3: Content of gelling agent | | | | | | | | | | | | |

The detalis of each additive described in Table V by abbrevations are the same as those described in Example 1 and Example 2.

### <<Inkjet image recording>>

### (Inkjet recording apparatus)

Each ink set composed of a combination of the prepared black ink K3 (colored ink) and white inks W21 to W30 was loaded into a line type inkjet recording apparatus having an inkjet recording head equipped with a piezo type inkjet nozzle.

The ink supply system contains an ink tank, an ink flow path, a sub-ink tank just before the inkjet recording head, a piping with a filter, and a piezo head. The temperature was heated so that the temperature from the ink tank to the head portion was 40 °C, and the temperature of the recording medium carrier was 40 °C.

### (Inkjet Image Recording)

### <Formation of Image 21>

A 100% white solid image having a size of 3 cm x 3 cm was formed on an A4 size polyethylene terephthalate fil (thickness: 150 µm) by using a black ink K3. Next, a 100% solid image having a size of 3 cm x 3 cm was formed using the white ink W21 so as to overlap the solid image formed with the black ink K3. Thereafter, the inks were cured using the following ultraviolet irradiation unit within 5 seconds to form image 21.

The ink head used a head of a resolution of 360 dpi with a multi-drop of 6 to 42 pL, and one head was used for each color. The ink was ejected with a resolution of 360 x 360 dpi, and the drive waveform and voltage were appropriately adjusted so that the coverage of the black ink K1 was 9.5 g/m² and the coverage of the white ink W1 was 10.0 g/ₘ².

Each ink was cured by irradiating light (395 nm, 4 W/cm², water cooled unit) with an ultraviolet irradiation unit (LED lamp manufactured by Phoseon Technology). The integrated light amount was appropriately adjusted by changing the conveyance speed of the recording medium so as to be 500 mJ/cm², and was measured using an ultraviolet integrated light amount meter C9536 and H9958 manufactured by Hamamatsu Photonics.

In the formation of the image 21, the Y ink, the M ink, and the C ink were not ejected from the inkjet head.

### <Formation of Image 22 to 30>

Images 22 to 30 were formed in the same manner as in the formation of the image 21 except that the white ink W21 was changed to the white inks W22 to W30, respectively.

### «Evaluation of Formed Image»

The formed images 21 to 30 were evaluated for abrasion resistance and adhesiveness in the same manner as in Example 1, and the obtained results are indicated in Table VI.

**Table VI**

| Image No. | Image composition | | Abrasion resistance | Adhesiveness | Remarks |
|---|---|---|---|---|---|
| | Black ink | White ink | | | |
| 21 | K3 | W21 | DD | DD | Comparative example |
| 22 | K 3 | W22 | CC | CC | Present invention |
| 23 | K 3 | W23 | CC | CC | Present invention |
| 24 | K3 | W24 | BB | CC | Present invention |
| 25 | K3 | W25 | CC | CC | Present invention |
| 26 | K3 | W26 | CC | CC | Present invention |
| 27 | K3 | W27 | CC | DD | Comparative example |
| 28 | K3 | W28 | BB | AA | Present invention |
| 29 | K3 | W29 | BB | BB | Present invention |
| 30 | K 3 | W30 | BB | BB | Present invention |

As is clear from the results indicated in Table VI, the images formed using the white ink and the colored ink (black ink) containing the gelling agent satisfying the conditions specified in the present invention were excellent in abrasion resistance and adhesion compared with the comparative examples.

### Industrial Applicability

The inkjet ink set of the present invention can provide an inkjet image having excellent scratch resistance and adhesion of a formed image, and the present invention can be suitably used in the field of recording an image on a transparent film or a vapor-deposited paper, which is widely used as a soft packaging material in the field of a packaging material, using an inkjet ink.

### Description of Symbols

1 and 51: Recording medium
2, 2W, 2Y, 2M, 2C, and 2K: Head carriage
3a, 3b, 3c, and 3d: Low-power active ray irradiation light source (for pinning)
4: High-power active ray irradiation light source
5: Ink head
10, 20, and 30: Inkjet recording apparatus
50, 60, and 70: Inkjet recording image
51C: Light transmitting recording medium
52: White ink layer
52A and 52B: Localized areas of gelling agent in the white ink layer
53: Titanium oxide
54: Colored ink layer
54A and 54B: Localized areas of gelling agent in the colored ink layer
55: Pigment particle
G: Gelling agent
W, Y, M, C, and K: Ink droplet
UV: Active ray

## Claims

1. An active ray curable inkjet ink set comprising a white ink and a colored ink each containing at least a photopolymerizable compound and a photopolymerization initiator, wherein the white ink further contains titanium oxide and a gelling agent, the colored ink further contains a color material, a value of a mass ratio of a content of the photopolymerization initiator in the white ink to a content of the photopolymerization initiator in the colored ink, namely in (white ink/colored ink), is in the range of 0.10 to 0.90, and the content of the photopolymerization initiator in the white ink is in the range of 0.3 to 2.7 mass% based on the total mass of the ink.

2. The active ray curable inkjet ink set described in claim 1, wherein a content of the gelling agent in the white ink is in the range of 0.3 to 2.5 mass% based on the total mass of the ink.

3. The active ray curable inkjet ink set described in claim 1 or 2, wherein the gelling agent contains a compound having a structure represented by Formula (G1) or (G2),
Formula (G1): R₁-CO-R₂
Formula (G2): R₃-COO-R₄
in Formula (G1) or (G2), R₁ to R₄ each independently represent a linear or branched hydrocarbon group having a carbon number in the range of 9 to 25.

4. An inkjet recording method using the active ray curable inkjet ink set described in any one of claims 1 to 3, comprising the steps of: printing an image with the white ink and the colored ink on a recording medium; then irradiating the white ink and the colored ink with an active ray to cure to the image and perform image recording.

5. The inkjet recording method described in claim 4, wherein, when printing the white ink on a recording medium at first, then printing the colored ink, and then irradiating an active ray collectively to perform image recording, a value of a mass ratio of the content of the photopolymerization initiator in (white ink/colored ink) is in the range of 0.30 to 0.70.

6. The inkjet recording method described in claim 4, wherein, when printing the colored ink on a recording medium at first, then printing the white ink, and then irradiating an active ray collectively to perform image recording, a value of a mass ratio of the content of the photopolymerization initiator in (white ink/colored ink) is in the range of 0.20 to 0.60.

## Patentansprüche

1. Aktivstrahlungshärtbarer Tintenstrahltintensatz, umfassend eine weiße Tinte und eine farbige Tinte, die jeweils mindestens eine fotopolymerisierbare Verbindung und einen Fotopolymerisationsinitiator enthalten, wobei die weiße Tinte ferner Titanoxid und ein Geliermittel enthält, die farbige Tinte ferner ein Farbmaterial enthält, ein Wert eines Masseverhältnisses eines Gehalts des Fotopolymerisationsinitiators in der weißen Tinte zu einem Gehalt des Fotopolymerisationsinitiators in der farbigen Tinte, nämlich in (weißer Tinte/farbiger Tinte), im Bereich 0,10 bis 0,90 liegt und der Gehalt des Fotopolymerisationsinitiators in der weißen Tinte im Bereich 0,3 bis 2,7 Masse-%, bezogen auf die Gesamtmasse der Tinte, liegt.

2. Aktivstrahlungshärtbarer Tintenstrahlsatz wie in Anspruch 1 beschrieben, wobei ein Gehalt des Geliermittels in der weißen Tinte im Bereich von 0,3 bis 2,5 Masse-%, bezogen auf die Gesamtmasse der Tinte, liegt.

3. Aktivstrahlungshärtbarer Tintenstrahltintensatz wie in Anspruch 1 oder 2 beschrieben, wobei das Geliermittel eine Verbindung mit einer durch Formel (G1) oder (G2) dargestellten Struktur enthält,
Formel (G1): R₁-CO-R₂
Formel (G2): R₃-COO-R₄,
in Formel (G1) oder (G2) stellen R₁ bis R₄ jeweils unabhängig eine lineare oder verzweigte Kohlenwasserstoffgruppe mit einer Kohlenstoffzahl im Bereich von 9 bis 25 dar.

4. Tintenstrahlaufzeichnungsverfahren unter Verwendung des aktivstrahlungshärtbaren Tintenstrahltintensatz wie in einem der Ansprüche 1 bis 3 beschrieben, umfassend die Schritte: Drucken eines Bildes mit der weißen Tinte und der farbigen Tinte auf einem Aufzeichnungsmedium, dann Bestrahlen der weißen Tinte und der farbigen Tinte mit einer Aktivstrahlung, um das Bild zu härten und eine Bildaufzeichnung durchzuführen.

5. Tintenstrahlaufzeichnungsverfahren wie in Anspruch 4 beschrieben, wobei, wenn zunächst die weiße Tinte auf einem Aufzeichnungsmedium gedruckt wird, dann die farbige Tinte gedruckt wird und dann gemeinsam eine Aktivstrahlung eingestrahlt wird, um eine Bildaufzeichnung durchzuführen, ein Wert eines Masseverhältnisses des Gehalts des Fotopolymerisationsinitiators in (weißer Tinte/farbiger Tinte) im Bereich von 0,30 bis 0,70 liegt.

6. Tintenstrahlaufzeichnungsverfahren wie in Anspruch 4 beschrieben, wobei, wenn zunächst die farbige Tinte auf einem Aufzeichnungsmedium gedruckt wird, dann die weiße Tinte gedruckt wird und dann gemeinsam eine Aktivstrahlung eingestrahlt wird, um eine Bildaufzeichnung durchzuführen, ein Wert eines Masseverhältnisses des Gehalts des Fotopolymerisationsinitiators in (weißer Tinte/farbiger Tinte) im Bereich von 0,20 bis 0,60 liegt.

## Revendications

1. Jeu d'encres à jet d'encre durcissable par rayonnement actif comprenant une encre blanche et une encre colorée contenant chacune au moins un composé photopolymérisable et un initiateur de photopolymérisation, dans lequel l'encre blanche contient en outre de l'oxyde de titane et un agent gélifiant, l'encre colorée contient en outre un matériau de couleur, une valeur d'un rapport massique d'une teneur en initiateur de photopolymérisation dans l'encre blanche sur une teneur en initiateur de photopolymérisation dans l'encre colorée, notamment dans (encre blanche/encre colorée), se situe dans la plage allant de 0,10 à 0,90, et la teneur en initiateur de photopolymérisation dans l'encre blanche se situe dans la plage allant de 0,3 à 2,7 % en masse sur la base de la masse totale de l'encre.

2. Jeu d'encres à jet d'encre durcissable par rayonnement actif décrit selon la revendication 1, dans lequel une teneur en agent gélifiant dans l'encre blanche se situe dans la plage allant de 0,3 à 2,5 % en masse sur la base de la masse totale de l'encre.

3. Jeu d'encres à jet d'encre durcissable par rayonnement actif décrit selon la revendication 1 ou 2, dans lequel l'agent gélifiant contient un composé présentant une structure représentée par la formule (G1) ou (G2),
Formule (G1) : R₁-CO-R₂
Formule (G2) : R₃-COO-R₄
dans la formule (G1) ou (G2), R₁ à R₄ représentent chacun indépendamment un groupe hydrocarboné linéaire ou ramifié présentant un nombre de carbone situé dans la plage allant de 9 à 25.

4. Procédé d'enregistrement à jet d'encre utilisant le jeu d'encres à jet d'encre durcissable par rayonnement actif décrit selon l'une quelconque des revendications 1 à 3, comprenant les étapes de : impression d'une image avec de l'encre blanche et de l'encre colorée sur un support d'enregistrement; puis d'irradiation de l'encre blanche et de l'encre colorée avec un rayonnement actif pour durcir sur l'image et réaliser un enregistrement de l'image.

5. Procédé d'enregistrement à jet d'encre décrit selon la revendication 4, dans lequel, lors de l'impression en premier lieu de l'encre blanche sur un support d'enregistrement, puis de l'impression de l'encre colorée, et enfin de l'irradiation d'un rayonnement actif conjointement pour réaliser un enregistrement d'image, une valeur d'un rapport massique de la teneur en initiateur de photopolymérisation dans (encre blanche/encre colorée) se situe dans la plage allant de 0,30 à 0,70.

6. Procédé d'enregistrement à jet d'encre décrit selon la revendication 4, dans lequel, lors de l'impression en premier lieu de l'encre colorée sur un support d'enregistrement, puis de l'impression de l'encre blanche, et enfin de l'irradiation d'un rayonnement actif conjointement pour réaliser un enregistrement d'image, une valeur d'un rapport massique de la teneur en initiateur de photopolymérisation dans (encre blanche/encre colorée) se situe dans la plage allant de 0,20 à 0,60.
